# EUROPÄISCHE PATENTSCHRIFT

(11) **EP 3 194 314 B1**
(45) Veröffentlichungstag und Bekanntmachung des Hinweises auf die Patenterteilung: **15.08.2018**
(21) Anmeldenummer: 14781822.3
(22) Anmeldetag: 15.09.2014
(51) Int. Cl.: B65G 67/08

(54) **VORRICHTUNG ZUM BELADEN VON LADEFLÄCHEN**
DEVICE FOR LOADING LOADING SURFACES
DISPOSITIF DE CHARGEMENT DE SURFACES DE CHARGEMENT

(43) Veröffentlichungstag der Anmeldung: 26.07.2017
(73) Patentinhaber: Haver & Boecker OHG, 59302 Oelde (DE)
(72) Erfinder: PAGENKEMPER, Bernhard, 33378 Rheda-Wiedenbrück (DE); OHLMEYER, Claus, 48163 Münster (DE)
(74) Vertreter: BSB Patentanwälte Schütte & Engelen Partnerschaft mbB
(86) Internationale Anmeldenummer: PCT/EP2014/069639
(87) Internationale Veröffentlichungsnummer: WO 2016/041572

(56) Entgegenhaltungen:
- WO-A1-88/02346
- DE-A1- 2 231 495
- JP-U- S5 848 635
- US-A- 4 701 091
- US-A- 5 718 325

## Beschreibung

Die vorliegende Erfindung betrifft eine Vorrichtung zum Beladen von Ladeflächen von Transportmitteln mit Säcken oder anderen Stückgütern. Neben der Beladung von LKW mit Säcken ist auch die Beladung von z. B. Eisenbahnwaggons oder Schiffen möglich.

Obwohl die Erfindung nicht darauf beschränkt ist, so ist sie insbesondere für den Einsatz bei der Beladung von LKW oder dgl. mit Säcken geeignet, die mit Schüttgütern gefüllt sind. Bei der Abfüllung von Zement in Säcke werden oftmals rotierende Packmaschinen eingesetzt, die über 6, 8, 12 oder sogar 16 Füllstutzen verfügen. Bei der Rotation der Packmaschine werden von Hand oder automatisch Säcke auf die Füllstutzen aufgeschoben bzw. aufgeschossen, während einer Umdrehung gefüllt und schließlich automatisiert abgeworfen. Die abgeworfenen Säcke werden gegebenenfalls hinsichtlich ihres Gewichtes noch einmal überprüft und über Transportbänder zu einer Vorrichtung zum Beladen von Transportmitteln mit den abgefüllten Säcken transportiert.

Eine erfindungsgemäße Vorrichtung ist dazu vorgesehen, an einer Trägereinrichtung wie einem Gebäude montiert zu werden. Dabei werden die Säcke auf oder oberhalb einer Zuführebene an der Trägereinrichtung oberhalb der Transportfläche zugeführt. Unterhalb der Zuführebene ist auf der Transportfläche ein Transportmittel wie beispielsweise ein LKW, ein Waggon oder ein Schiff zur Beladung positionierbar. Die erfindungsgemäße Vorrichtung umfasst eine längsbewegliche Beladeeinrichtung, die eine Zuführeinrichtung zum Antransport der Säcke, einen höhenverstellbar vorgesehenen Beladekopf und eine Transportpuffereinrichtung aufweist. Dabei befindet sich die Zuführeinrichtung auf bzw. oberhalb der Zuführebene und der Beladekopf ist zum Beladen unterhalb der Zuführebene angeordnet, wobei der Beladekopf mit der Zuführeinrichtung über die Transportpuffereinrichtung verbunden ist.

Im Stand der Technik sind Vorrichtungen zum Beladen von Ladeflächen mit Säcken oder anderen Stückgütern bekannt geworden, wobei diese Vorrichtungen eine Zuführeinrichtung oberhalb einer Zuführebene einer Trägereinrichtung aufweisen und einen Beladekopf umfassen, der sich zum Beladen unterhalb der Zuführebene befindet. Zwischen dem höhenverstellbaren Beladekopf und der Zuführeinrichtung ist ein Transportband vorgesehen, welches die zu verladenen Säcke antransportiert. Eine solche Vorrichtung ist z. B. mit der DE 22 31 495 A1 bekannt geworden.

Die bekannten Vorrichtungen zum Beladen funktionieren grundsätzlich zuverlässig. Nachteilig an den bekannten Vorrichtungen ist aber, dass bei routinemäßigen Wartungen oder beim Austausch eines Transportbandes ein erheblicher Aufwand entsteht. Regelmäßig muss zur Wartung ein Gerüst aufgebaut werden, um den Beladekopf und/oder das Transportband zu warten oder auszutauschen. Dadurch entsteht eine Ausfallzeit von mehreren Stunden.

Wird eine solche Vorrichtung zum Beladen beispielsweise bei der Abfüllung von Zement in Säcke eingesetzt, bei der rotierende Packmaschinen eingesetzt werden, die z. B. 3000 Säcke/Stunde jeweils mit 50 kg Zement füllen, so muss die gesamte Packmaschine während der Wartung der Vorrichtung zum Beladen gestoppt werden, wodurch ein beträchtlicher Verlust entsteht oder es muss eine redundante zweite Anlage vorgesehen werden.

Die DE 10 2013 015 136 offenbart eine an einer Trägereinrichtung angeordnete Vorrichtung zum Beladen von Ladeflächen mit einer verfahrbaren Beladeeinrichtung. Die Beladeeinrichtung ist an einer langgestreckten Aussparung in Längsrichtung verfahrbar vorgesehen, um die Ladeflächen der vollständigen Länge nach beladen zu können. Ein höhenverstellbarer Beladekopf erstreckt sich zum Beladen durch die Aussparung nach unten, um die Säcke auf ein auf die Ladefläche eines auf einer Transportfläche stehenden Transportmittels, wie z. B. einen LKW zu laden. Zur einfacheren Wartung ist an der Trägereinrichtung am hinteren Ende eine Wartungsposition vorgesehen, in welche die Beladeeinrichtung in Längsrichtung nach hinten verfahrbar ist. In der Wartungsposition sind seitliche Wartungsstege an der Trägereinrichtung vorgesehen, sodass die Aussparung dort schmaler als der Beladekopf ist. Die Wartungsstege überbrücken den Spalt zu der Transportpuffereinrichtung. Vor dem vorderen Ende der Wartungsstege ist der Beladekopf bis in die Ebene der Aussparung höhenverstellbar. So können an der Transportpuffereinrichtung und an dem Beladekopf Wartungsarbeiten ohne Aufbau eines separaten Gerüstes vorgenommen werden. Eine solche Vorrichtung erleichtert die Durchführung vorzunehmender Wartungsarbeiten, da keine separates Gerüst nötig ist. Erforderlich ist aber eine Anpassung des Gebäudes. Außerdem ist eine Wartung nur in der speziellen hinteren Wartungsposition möglich. Eine durchgängige Anbringung von Wartungsstegen ist aber nicht möglich, da der Beladekopf breiter als die Transportpuffereinrichtung und zudem auch noch seitlich verstellbar ist, um geringe Positionierabweichungen der Transportmittel ausgleichen zu können. Deshalb würden durchgängige Wartungsstege ein Hochfahren des Beladekopfes verhindern oder der Spalt würde so groß sein, dass auch eine erwachsene Person durchfallen kann.

Die US 5 718 325 A offenbart eine Vorrichtung nach dem Oberbegriff des Anspruchs 1. Es ist die Aufgabe der vorliegenden Erfindung, eine Vorrichtung zum Beladen von Ladeflächen zur Verfügung zu stellen, womit eine noch flexiblere Wartung mit einer geringen Ausfallzeit ermöglicht wird. Die erfindungsgemäße Vorrichtung nach Anspruch 1 umfasst eine längsbewegliche Beladeeinrichtung zum Beladen von Ladeflächen von auf einer Transportfläche beweglichen Transportmitteln mit Säcken oder anderen Stückgütern. Die Beladeeinrichtung umfasst wenigstens zwei auf einer Zuführebene anzuordnende und in eine gemeinsame Längsrichtung verfahrbare und voneinander beabstandete Fahrkomponenten. Dabei ist eine erste der beiden Fahrkomponenten als Zuführeinrichtung zur Zufuhr der Säcke ausgebildet und eine zweite der Fahrkomponenten bildet eine Fahreinrichtung mit einem höhenverstellbar daran gehaltenen Beladekopf zur Abgabe der Säcke. Die Zuführeinrichtung ist mit dem Beladekopf über eine Transportpuffereinrichtung verbunden. Mit einer der Fahrkomponenten ist wenigstens ein mitfahrender Wartungssteg fest verbunden. Der Wartungssteg erstreckt sich in der Längsrichtung wenigstens über einen wesentlichen Teil des Abstandes der beiden Fahrkomponenten. An der Transportpuffereinrichtung ist wenigstens ein sich seitlich nach außen erstreckender Stützsteg ausgebildet, welcher in einer oberen Position des Beladekopfes zusammen mit dem Wartungssteg eine gemeinsame Arbeitsplattform für Wartungs- und Reparaturzwecke zur Verfügung stellt. Die erfindungsgemäße Vorrichtung hat viele Vorteile. Ein erheblicher Vorteil der erfindungsgemäßen Vorrichtung besteht darin, dass ein mitfahrender Wartungssteg vorgesehen ist, der somit an jeder Längsposition der längsbeweglichen Beladeeinrichtung zur Verfügung steht. Dadurch kann die Aussparung in einer Trägereinrichtung bzw. einem Gebäude so gewählt werden, dass der Beladekopf an jeder beliebigen Position durch die Aussparung hindurch nach oben oder an die Aussparung von unten heran gefahren werden kann. Der mitfahrende Wartungssteg ist in jeder Längsposition vorhanden und kann für Wartungszwecke betreten werden.

Der Wartungssteg ist mit einer der Fahrkomponenten fest verbunden und erstreckt sich in der Draufsicht seitlich von bzw. neben der Transportpuffereinrichtung. Der Wartungssteg ist unabhängig von der Transportpuffereinrichtung, die schwenkbar an einer der Fahrkomponenten befestigt ist. Eine starre Verbindung zwischen der Transportpuffereinrichtung und dem Wartungssteg liegt nicht vor. Der Beladekopf ist insgesamt oder teilweise in einer Querrichtung quer zu der Längsrichtung verstellbar oder verfahrbar vorgesehen, um so eine Positionierungsungenauigkeit eines zu beladenen Transportmittels auf der Transportfläche ausgleichen zu können. Steht beispielsweise ein LKW um 5 oder 10 cm nach rechts oder links versetzt zu der eigentlichen Beladungsposition, so kann der Beladekopf einen solchen Querversatz ausgleichen.

Erfindungsgemäß ist an der Transportpuffereinrichtung wenigstens ein sich seitlich nach außen erstreckender Stützsteg ausgebildet. Der Stützsteg stellt in einer oberen Position des Beladekopfes zusammen mit dem Wartungssteg eine gemeinsame Arbeitsplattform für Wartungs- und Reparaturzwecke zur Verfügung. Dadurch kann eine größere gemeinsame Arbeitsplattform zur Verfügung gestellt werden. Zudem kann in der oberen Position jeder Spalt nach unten so verschlossen werden, dass eine Absturzgefahr zuverlässig ausgeschlossen wird.

Vorzugsweise ist der Wartungssteg an einer Wartungshalterung befestigt. Die Wartungshalterung ist vorzugsweise an der Zuführeinrichtung befestigt. Möglich ist es auch, die Wartungshalterung an der Fahreinrichtung zu befestigen. In einem einfachen Fall kann die Wartungshalterung als Balken ausgebildet sein oder die Form eines Zinken aufweisen, der sich von der einen Fahrkomponente in Richtung der anderen Fahrkomponente erstreckt. Gegebenenfalls kann die Wartungshalterung eine vertikale Abstützung an der Schiene aufweisen.

Die beiden Fahrkomponenten weisen einen Abstand in Längsrichtung auf, der von einer Höhe des Beladekopfes abhängt. Ein maximaler Abstand wird in der oberen Position des Beladekopfes in etwa auf der Höhe der Fahrkomponenten erreicht. Ein minimaler Abstand liegt vor, wenn der Beladekopf so weit wie möglich abgesenkt wird. Vorzugsweise weist der Wartungssteg eine Länge auf, die nahezu dem minimalen Abstand der beiden Fahrkomponenten voneinander entspricht.

Vorzugsweise ist der Wartungssteg oder wenigstens ein Wartungssteg an einer der wenigstens zwei teleskopierbaren Verbindungskomponenten umfassenden Verbindungseinrichtung befestigt. Die Verbindungseinrichtung ist an den zwei Fahrkomponenten aufgenommen und vorzugsweise mit wenigstens einer der beiden Fahrkomponenten fest verbunden. Die Verbindungseinrichtung ist in sich teleskopierbar, sodass bei einer Höhenverstellung des Beladekopfes die zwei teleskopierbaren Verbindungskomponenten miteinander teleskopieren. Eine solche Ausgestaltung erlaubt eine Verbindung der beiden Fahrkomponenten in Längsrichtung, sodass der Wartungssteg keine separate Abstützung in vertikaler Richtung benötigt. Außerdem können von unten auftretende Vertikalkräfte von beiden Verbindungskomponenten aufgenommen und entsprechend abgeleitet werden.

Es ist bevorzugt, dass die Verbindungseinrichtung an einer der beiden Fahrkomponenten fest und an der anderen Fahrkomponente teleskopierbar aufgenommen ist. Möglich ist es auch, dass die eine Verbindungskomponente fest an der einen Fahrkomponente aufgenommen ist und dass die andere Verbindungskomponente fest an der anderen Fahrkomponente aufgenommen ist. Die beiden Verbindungskomponenten der Verbindungseinrichtung können dann beispielsweise in einem mittleren Bereich zwischen den Fahrkomponenten miteinander teleskopieren.

Möglich ist es auch, dass eine Verbindungseinrichtung vorgesehen ist, die an einer Fahrkomponente fest und an der anderen Fahrkomponente gleitend aufgenommen ist. Dann ist ein Teleskopieren nicht nötig.

Vorzugsweise erstreckt sich an beiden Längsseiten der Beladeeinrichtung jeweils wenigstens eine Verbindungseinrichtung von der Zuführeinrichtung bis zu der Fahreinrichtung.

Die Verbindungseinrichtung ist besonders bevorzugt zur Aufnahme und Verteilung von Vertikalkräften auf die zwei Fahrkomponenten ausgebildet. Derartige Vertikalkräfte können beispielsweise auftreten, wenn der Beladekopf beim Anheben oder Absenken in ungeplanter oder unerwarteter Weise gegen andere Gegenstände oder Komponenten stößt und sich deshalb Vertikalkräfte von dem Beladekopf über die Transportpuffereinrichtung auf die Fahrkomponenten übertragen. Nimmt nur eine einzige Verbindungskomponente derartige Vertikalkräften auf, kann dies in ungünstigen Fällen zu einem Abheben der Fahrkomponente führen. Eine Verteilung solcher Vertikalkräften auf beide Fahrkomponenten führt zu einer verbesserten Ableitung derartiger Vertikalkräfte.

In bevorzugten Weiterbildungen ist der Beladekopf oder wenigstens ein Teil des Beladekopfes in Querrichtung verstellbar. Die Transportpuffereinrichtung weist vorzugsweise eine in der Querrichtung entsprechend verschwenkbare Transportstrecke zum Transport der Säcke auf. Die Transportstrecke dient zur Übernahme der von der Zuführeinrichtung antransportierten Säcke und zum Weitertransport der Säcke entlang der Transportpuffereinrichtung, bis die Säcke dem Beladekopf übergeben werden. Die Transportstrecke ist vorzugsweise mit der Zuführeinrichtung und dem Beladekopf gekoppelt, um eine Verstellung des Beladekopfes in der Höhe und in der Querrichtung auszugleichen. Dazu ist die Transportstrecke mit der Transportpuffereinrichtung vorzugsweise insgesamt um eine horizontale Achse schwenkbar, um den Neigungswinkel einzustellen. Die Transportstrecke ist vorzugsweise auf der Transportpuffereinrichtung um eine sich nach oben erstreckende Achse verschwenkbar, sodass eine Längsachse der Transportpuffereinrichtung einen Winkel zu einer Längsachse der Transportstrecke aufweist.

Bei solchen Ausgestaltungen wird auch bei einer seitlichen Verstellung des Beladekopfes oder eines Teils des Beladekopfes in der Querrichtung ein auf der Transportstrecke antransportierter Sack dem Beladekopf immer an der gleichen Übergabestelle übergeben.

Vorzugsweise erstreckt sich der Stützsteg von der Transportpuffereinrichtung aus in die Querrichtung nach außen. Insbesondere erstreckt sich der Stützsteg wenigstens etwa so weit nach außen, wie eine maximale Auslenkung der Transportstrecke bei der seitlichen Verschwenkung der Transportstrecke. Dadurch wird zusammen mit den Wartungsstegen dafür gesorgt, dass eine möglichst durchgehende Arbeitsplattform zur Verfügung gestellt wird. Außerdem wird eine Kollision der einzelnen Teile beim Absenken oder Hochfahren der Transportpuffereinrichtung miteinander vermieden. Es ergibt sich eine immer definierte und gleiche Gestalt der Stützstege in der Draufsicht bzw. Ausdehnung der Stützstege in der Querrichtung.

Der Stützsteg kann auch etwas breiter oder auch etwas schmaler als die sich durch die maximale Auslenkung der Transportstrecke ergebende Breite sein, sofern die zulässigen Spaltmaße eingehalten werden und eine Kollision nicht auftritt. In vorteilhaften Weiterbildungen ist die Transportpuffereinrichtung um wenigstens den doppelten maximalen Verstellweg des Beladekopfes in der Querrichtung schmaler als der Beladekopf. Vorzugsweise ist der Beladekopf in der Grundstellung zentrisch zu der Transportpuffereinrichtung ausgerichtet. Vorzugsweise ist ein Verstellweg des Beladekopfes zu beiden Seiten hin symmetrisch.

Besonders bevorzugt ist eine Breite der Transportpuffereinrichtung so gewählt, dass die Transportpuffereinrichtung in der Querrichtung nicht über den Beladekopf hinaussteht. Dadurch wird dafür gesorgt, dass auch bei der Beladung von Transportmitteln mit Seitenwänden an der Ladefläche eine zuverlässige und störungsfreie Beladung möglich ist. Würde die Transportpuffereinrichtung seitlich über den Beladekopf hinaus stehen, könnte der Beladekopf nicht bis zu dem Rand einer Ladefläche Säcke abladen, da die Transportpuffereinrichtung gegen eine Seitenwand stoßen würde.

Vorzugsweise befinden sich die Zuführeinrichtung und die Fahreinrichtung in der Längsrichtung in einem variablen und von einem Neigungswinkel der Transportpuffereinrichtung abhängenden Abstand. Um einen gegebenenfalls verbleibenden Längsspalt zwischen dem Wartungssteg und dem Beladekopf oder der Zuführeinrichtung ausgleichen zu können, ist es bevorzugt, dass wenigstens ein Wartungssteg in wenigstens eine Längsrichtung verlängerbar und insbesondere abklappbar oder ausziehbar ist. In allen Ausgestaltungen ist es dabei möglich, dass der Wartungssteg in Richtung auf die erste Fahrkomponente oder in Richtung auf die zweite Fahrkomponente verlängerbar ist.

Vorzugsweise ist der Beladekopf derart höhenverstellbar, dass die Transportpuffereinrichtung in jeder möglichen Stellung einen Neigungswinkel von kleiner 60° zur Horizontalen aufweist. Insbesondere weist die Transportpuffereinrichtung einen Neigungswinkel kleiner 45° oder kleiner 40° auf. Es ist auch möglich, dass der maximale Neigungswinkel auf 30° oder 35° begrenzt ist. Der genaue Neigungswinkel hängt von den geometrischen Bedingungen ab und kann im Einzelfall etwas größer oder etwas kleiner sein.

In allen Ausgestaltungen ist es besonders bevorzugt, dass die Transportpuffereinrichtung eine parallelogrammartige Tragkonstruktion aufweist, die mit der Zuführeinrichtung an einem Ende und dem Beladekopf an dem anderen Ende schwenkbar verbunden ist. Dabei ist es besonders bevorzugt, dass die Fahreinrichtung über eine Koppeleinrichtung und insbesondere eine Koppelstange mit der parallelogrammartigen Tragkonstruktion gekoppelt ist.

In allen Ausgestaltungen kann an wenigstens einem Ende des Wartungssteges und/oder des Stützsteges ein Schutzgitter angeordnet sein. Vorzugsweise ist auch in den seitlichen Bereichen des Wartungssteges oder oberhalb des Wartungssteges ein Schutzgitter vorgesehen. Wenigstens eine Tür kann darin vorgesehen sein, um das Betreten des Wartungssteges von der Trägereinrichtung aus zu ermöglichen.

In allen Ausgestaltungen ist der Beladekopf vorzugsweise über ein flexibles Element höhenverstellbar an der Fahreinrichtung angeordnet. Wenn die Transportpuffereinrichtung über eine Koppeleinrichtung mit der Fahreinrichtung gekoppelt ist, wird bei einer Veränderung der Höhe des Beladekopfes die Zuführeinrichtung in Längsrichtung bewegt und der Beladekopf bewegt sich erheblich weniger in der Längsrichtung als die Zuführeinrichtung. Insbesondere verbleibt der Beladekopf auch bei einer Höhenverstellung im Wesentlichen und insbesondere vollständig in Längsrichtung ortsfest. Es kann eine genaue Lagenbildung und eine genaue Stapelung der einzelnen Säcke gewährleistet werden, während gleichzeitig nur ein geringer Bauraum benötigt wird.

Besonders bevorzugt wird der Beladekopf festgesetzt bzw. fixiert.

Vorzugsweise ist die Koppeleinrichtung schwenkbar an der Fahreinrichtung und/oder der Transportpuffereinrichtung befestigt. Dabei ist es möglich, dass die Koppeleinrichtung über entsprechende Schwenkgelenke schwenkbar an den einzelnen Komponenten befestigt ist. Möglich ist es aber auch, dass an oder in der Nähe des Befestigungspunktes der Koppeleinrichtung mit der Fahreinrichtung und/oder der Transportpuffereinrichtung eine Art von Schwenkgelenk angeordnet ist, welches über eine elastische Verformung eine Schwenkbewegung der Schwenkeinrichtung ermöglicht.

Besonders bevorzugt weist die Koppeleinrichtung wenigstens eine Koppelstange auf. In bevorzugten Ausgestaltungen sind wenigstens zwei Koppelstangen vorgesehen.

Vorzugsweise weist die Transportpuffereinrichtung eine parallelogrammartige Tragkonstruktion auf. Die parallelogrammartige Tragkonstruktion umfasst dabei insbesondere einen oberen und einen unteren Längsverbinder und einen ersten und einen zweiten Anschlussrahmen. Dabei sind die Längsverbinder und die Anschlussrahmen gelenkig miteinander verbunden. Dadurch entsteht die parallelogrammartige Tragkonstruktion. Dabei ist an dem ersten Anschlussrahmen der obere Längsverbinder gelenkig angeordnet. Unterhalb des oberen Längsverbinders ist der untere Längsverbinder an den ersten Anschlussrahmen gelenkig angeschlossen. Der obere Längsverbinder ist mit dem zweiten Anschlussrahmen gelenkig verbunden. Der untere Längsverbinder ist unterhalb des oberen Längsverbinders mit dem zweiten Anschlussrahmen gelenkig verbunden. Eine solche Konstruktion ermöglicht eine Höhenverschwenkung des zweiten Anschlussrahmens gegenüber dem ersten Anschlussrahmen, wobei der zweite Anschlussrahmen seine (insbesondere senkrechte) Orientierung beibehält. Die parallelogrammartige Konstruktion erlaubt es, den Beladekopf mit dem zweiten Anschlussrahmen zu verbinden, sodass sich bei einer Höhenverstellung des Beladekopfes dessen horizontale Orientierung nicht verändert. Vorzugsweise ist die Koppeleinrichtung in einem mittleren Bereich der Tragkonstruktion an die parallelogrammartige Tragkonstruktion gekoppelt. Insbesondere ist die Koppeleinrichtung mit einem der Längsverbinder gekoppelt. Das bedeutet, dass die Koppeleinrichtung direkt mit dem Längsverbinder gekoppelt sein kann. Möglich ist es aber auch, dass die Koppeleinrichtung an beispielsweise eine Querstange angeschlossen ist, die wiederum mit dem Längsverbinder verbunden ist. Die Längsverbinder können jeweils als Tragrohre ausgebildet sein und zusammen mit den Anschlussrahmen oder Anschlusselementen die Tragkonstruktion der Transportpuffereinrichtung bilden.

Insbesondere liegt die Koppelstelle der Koppeleinrichtung mit dem Längsverbinder in Längsrichtung der Tragkonstruktion in einem Bereich zwischen etwa einem Drittel und zwei Dritteln der Länge. Vorzugsweise ist der Koppelpunkt der Koppeleinrichtung an den Längsverbinder etwa in der Mitte der Länge der parallelogrammartigen Tragkonstruktion. Dabei wird als Mitte ein Bereich angesehen, der sich um den exakten Mittelpunkt um ± 5 % oder ± 10 % herum erstreckt. Besonders bevorzugt ist die Mitte der Längserstreckung der Tragkonstruktion, wobei geringe Abweichungen von 1% oder 2% möglich sind.

Vorzugsweise beträgt eine Länge der Koppeleinrichtung und/oder der Koppelstange der Koppeleinrichtung zwischen etwa 40 % und 60 % der Länge der parallelogrammartigen Tragkonstruktion. Insbesondere beträgt die Länge der Koppeleinrichtung die Hälfte der Länge der parallelogrammartigen Tragkonstruktion, wobei wieder Toleranzen von ± 10 % und vorzugsweise ± 5 % möglich sind.

In bevorzugten Weiterbildungen ist an der parallelogrammartigen Tragkonstruktion wenigstens ein Transportband aufgenommen. Ein solches Transportband ermöglicht auch bei unterschiedlichen Neigungswinkeln der Transportpuffereinrichtung einen zuverlässigen Weitertransport der zu verladenen Säcke. Eine Mindestneigung der Transportpuffereinrichtung für einen eigenständigen Transport über Schwerkraft oder dergleichen muss nicht eingehalten werden. Die Transportpuffereinrichtung ist besonders bevorzugt linear gestreckt ausgebildet und weist insgesamt einen variablen Neigungswinkel auf. Es ist nicht nötig, einen separaten Bereich mit erhöhter Neigung vorzusehen, damit eine Mindestneigung eingehalten wird.

In allen Ausgestaltungen ist es bevorzugt, dass die Transportpuffereinrichtung in Förderrichtung zwischen der Zuführeinrichtung und dem Beladekopf angeordnet ist. Die Transportpuffereinrichtung bildet dabei das Bindeglied zwischen den der Zuführeinrichtung zugeführten Säcken und dem Beladekopf, wo die Säcke dem Transportmittel übergeben werden.

Vorzugsweise weist die Fahreinrichtung ein Hubwerk mit wenigstens einer Seilrolle und wenigstens einem Hubmotor auf. Aus beispielsweise Sicherheitsgründen ist es möglich und bevorzugt, dass zwei Seile vorgesehen sind, die dann vorzugsweise auf jeweils einer eigenen Seilrolle aufgewickelt werden.

Vorzugsweise weist die Fahreinrichtung einen Antrieb zur Längsbewegung auf. Es ist ebenso bevorzugt, dass die Fahreinrichtung eine Bremseinrichtung oder eine Feststelleinrichtung oder eine Feststellbremse oder dergleichen aufweist, um eine Position der Fahreinrichtung in Längsrichtung zu fixieren. Eine solche Fixierung erfolgt insbesondere wenigstens vor einer Höhenverstellung des Beladekopfes, damit sichergestellt wird, dass die Zuführeinrichtung sich in Längsrichtung bewegt, während der Beladekopf und die Fahreinrichtung in Längsrichtung ortsfest verbleiben.

In allen Ausgestaltungen ist es bevorzugt, dass der Beladekopf wenigstens eine Verteileinrichtung zur Erzeugung wenigstens eines vorbestimmten Lagenbildes umfasst. Möglich und bevorzugt ist es insbesondere, dass der Beladekopf zur Erzeugung von abwechselnd aufeinander gestapelten Lagenbildern geeignet und ausgebildet ist, wobei sich die Säcke jeweils stückweise überlappen. Das wird dadurch realisiert, dass einzelne Säcke eines Lagenbildes um 90° gedreht werden, sodass sich aufgrund der unterschiedlichen Länge und Breite jeweils ein Überlapp der jeweils gestapelten Säcke und somit eine Verzahnung der Säcke untereinander ergibt.

Die Anfertigung solcher Lagenbilder ist im angeführten Stand der Technik schon bekannt und wird bei der erfindungsgemäßen Vorrichtung in ähnlicher oder gleicher Weise durchgeführt.

Vorzugsweise umfasst die Zuführeinrichtung wenigstens ein Zuführband, um die Säcke zu transportieren. Der Zuführeinrichtung ist vorzugsweise eine Übergabeeinrichtung für antransportierte Säcke zugeordnet. Die beispielsweise von einer rotierenden Packmaschine gefüllten Säcke werden von der Packmaschine über ein Förderband abtransportiert und beispielsweise über die Übergabeeinrichtung der Zuführeinrichtung zugeführt. Dabei ist die Übergabeeinrichtung insbesondere ortsfest angeordnet, während die Zuführeinrichtung darunter vorgesehen und in Längsrichtung beweglich ist. Dabei wird die Zuführeinrichtung mit der gesamten Vorrichtung in Längsrichtung bewegt, um die gesamte Ladefläche beispielsweise eines LKW in Längsrichtung befüllen zu können. Außerdem ist die Zuführeinrichtung längsbeweglich, um bei einer Höhenverstellung des Beladekopfes den entsprechenden Längenausgleich vorzunehmen. Die Zuführeinrichtung weist eine solche Länge auf, dass in jeder Verstellposition des Beladekopfes eine zuverlässige Übergabe der antransportierten Säcke von der Übergabeeinrichtung auf die Zuführeinrichtung möglich ist. Dadurch wird sichergestellt, dass auch bei einer Höhenverstellung des Beladekopfes die Übergabeeinrichtung noch zuverlässig oberhalb der Zuführeinrichtung angeordnet ist.

In allen Ausgestaltungen ist es bevorzugt, dass die Transportpuffereinrichtung eine Transportstrecke aufweist, wobei die Transportstrecke wenigstens ein Transportband, wenigstens eine Pufferstrecke und wenigstens einen Zuteilungsförderer umfasst. Die Pufferstrecke dient zur Zwischenpufferung von Säcken beispielsweise bei einem Lagenwechsel oder dergleichen, damit die vorgeschaltete Packmaschine kontinuierlich weiter produzieren kann. Der Zuteilungsförderer gibt die Säcke gezielt an den Beladekopf ab, um bedarfsgemäß Säcke dem Beladekopf zuzuführen. Die Pufferstrecke kann dabei eine Rollenstrecke und/oder eine Gleitstrecke umfassen, auf der bzw. auf denen die Säcke passiv gefördert werden.

In allen Ausgestaltungen ist es bevorzugt, dass die Transportpuffereinrichtung wenigstens eine Entkopplungsstrecke umfasst, die insbesondere als Rollenstrecke oder Gleitstrecke ausgebildet sein kann. Vorzugsweise ist eine Entkopplungsstrecke am Anfang der Transportpuffereinrichtung vorgesehen, um eine Entkopplung zwischen der Zuführeinrichtung und der Transportpuffereinrichtung zu erzielen.

In allen Ausgestaltungen ist der Beladekopf insbesondere zwischen einer oberen Wartungsstellung, einer unteren Wartungsstellung und wenigstens mehreren höhenunterschiedlichen Beladepositionen höhenverstellbar. Ein Verfahren des Beladekopfes zu einer unteren Wartungsstellung unterhalb der untersten Beladeposition ist sehr vorteilhaft, da der Beladekopf so auch im abgesenkten Zustand zugänglich ist, sodass eine Reparatur am Beladekopf wahlweise auch in der unteren Wartungsstellung erfolgen kann. Ebenso kann der Beladekopf während des Betriebes - ohne das Transportmittel entfernen zu müssen - in eine obere Wartungsstellung gefahren werden, um einen defekten oder falsch liegenden Sack zu entfernen oder auszurichten.

Insgesamt stellt die Erfindung eine vorteilhafte Vorrichtung zum Beladen zur Verfügung, die einfache Möglichkeit zur Wartung bietet, ohne ein separates Gerüst aufbauen zu müssen. Da die Wartungsstege mit den Fahrkomponenten mitfahren, kann in jeder Längsposition eine Wartung oder Reparatur durchgeführt werden.

Eine große Bauhöhe wird dabei nicht benötigt, da die Höhenverstellung des Beladekopfes über wenigstens ein flexibles Element erfolgt, welches z. B. einfach aufgewickelt wird und somit nach oben keinen besonderen Bauraum erfordert. Der Antrieb einer Seilrolle oder einer Seilwinde ist mechanisch einfach realisierbar und benötigt keine Kopplung. Durch die Koppeleinrichtung wird sichergestellt, dass der Beladekopf ortsfest verbleibt, obwohl das Seil flexibel ausgebildet ist. Die Koppeleinrichtung bewirkt, dass sich die Zuführeinrichtung nach hinten verschiebt, wenn der Beladekopf hochgefahren wird. Ein Verschwenken des Beladekopfes an dem Seil wird durch die Koppeleinrichtung verhindert, sodass der Beladekopf ortsfest unterhalb der Fahreinrichtung verbleibt. Eine Auslenkung des Beladekopfes wird zuverlässig vermieden.

Durch die Parallelogrammführung an der Transportpuffereinrichtung wird eine Höhenverstellung des Beladekopfes ermöglicht, ohne dass der Beladekopf seinen Neigungswinkel verändert. Das Transportband der Transportpuffereinrichtung sorgt für einen zuverlässigen Weitertransport der Säcke, während die Pufferstrecke für eine Zwischenpufferung von beispielsweise einem, zwei oder drei Säcken sorgt, bevor die Säcke von dem Zuteilungsförderer an den Beladekopf übergeben werden. Dadurch wird für einen geringeren Verschleiß - auch bei einem dauerhaft umlaufenden Transportband - in der Transportpuffereinrichtung gesorgt.

Weitere Vorteile und Merkmale der vorliegenden Erfindung ergeben sich aus dem Ausführungsbeispiel, welches mit Bezug auf die beiliegenden Figuren im Folgenden erläutert wird:
In den Figuren zeigen:
- Fig. 1: eine perspektivische Ansicht der Vorrichtung mit der Beladeeinrichtung;
- Fig. 2: die Vorrichtung aus Fig. 1 in einer Vorderansicht;
- Fig. 3: die Vorrichtung aus Fig. 1 in einer Seitenansicht;
- Fig. 4: die Vorrichtung nach Fig. 1 in einer Draufsicht;
- Fig. 5: die Transportpuffereinrichtung und den Beladekopf der Vorrichtung nach Fig. 1 beim Beladen;
- Fig. 6: die Transportpuffereinrichtung und den Beladekopf aus Fig. 5 in einer unteren Wartungsposition;
- Fig. 7: die Transportpuffereinrichtung in einer schematischen perspektivischen Ansicht;
- Fig. 8: die Transportpuffereinrichtung aus Fig. 7 in einer schematischen Draufsicht;
- Fig. 9: die Vorrichtung aus Fig. 1 in einer schematischen Vorderansicht;
- Fig. 10: eine schematische perspektivische Ansicht der Transportpuffereinrichtung; und
- Fig. 11: zwei unterschiedliche Lagenbilder, die aufeinander gestapelt werden.

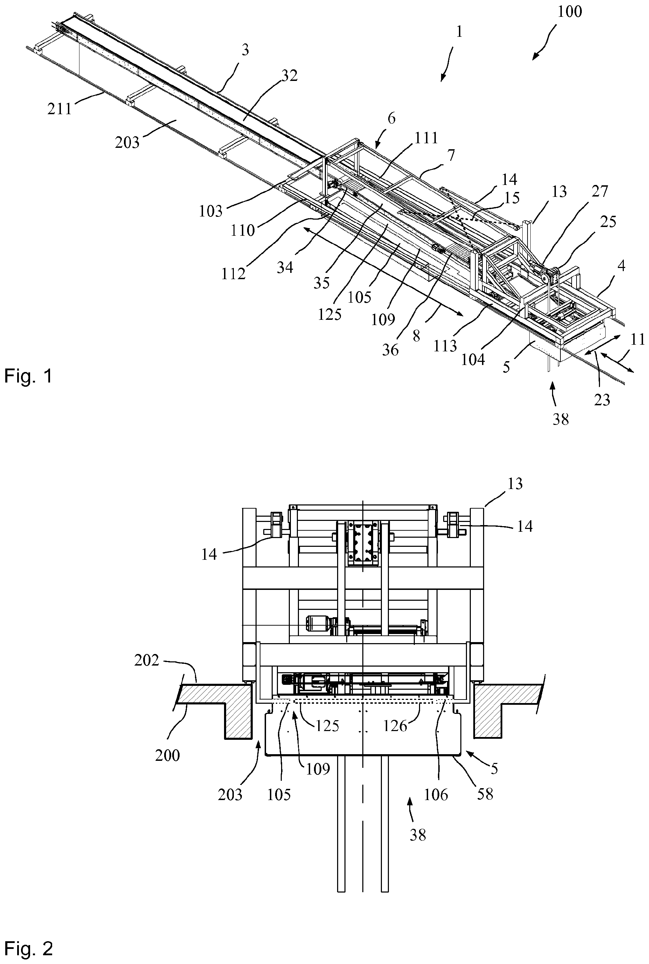

Eine erfindungsgemäße Vorrichtung 100 mit einer Beladeeinrichtung 1 ist in einer perspektivischen Ansicht in Figur 1 schematisch dargestellt. Die Vorrichtung 100 ist hier an einer Aussparung 203 in einer in Fig. 1 nicht näher dargestellten Trägereinrichtung bzw. an einem Gebäude 200 angeordnet. Die Beladeeinrichtung 1 ist in Längsrichtung 11 auf Schienen 211 verfahrbar vorgesehen und verfügt über zwei Fahrkomponenten 103 und 104, die über Radsätze 107 auf den Schienen 211 in der Längsrichtung 11 verfahrbar sind.

Die erste Fahrkomponente 103 ist als verfahrbare Zuführeinrichtung 3 ausgebildet, über die insbesondere mit Zement oder anderen Schüttgütern gefüllte Säcke 2 oder andere Stückgüter zugeführt werden. Der Zuführeinrichtung 3 werden an einer geeigneten Stelle, von einer nicht dargestellten Packmaschine, die Säcke 3 übergeben.

Die zweite Fahrkomponente 104 bildet eine Fahreinrichtung 4 in der Art eines Fahrwagens. An der Fahreinrichtung 4 ist der Beladekopf 5 höhenverstellbar gehalten.

An der Zuführeinrichtung 3 ist ein Transportband bzw. Zuführband 32 vorgesehen, welches die Säcke einer Transportpuffereinrichtung 6 zuführt, welche die Zuführeinrichtung 3 mit dem Beladekopf 5 verbindet. Der höhenverstellbare Beladekopf 5 ist an der Fahreinrichtung 4 gehalten. Bei der Höhenverstellung des Beladekopfes 5 bleibt der Beladekopf 5 in Längsrichtung 11 ortsfest. Wird der Beladekopf 5 nach oben verfahren, so schiebt sich die Zuführeinrichtung 3 nach hinten. Wenn der Beladekopf 5 nach unten gefahren wird, bewegt sich die Zuführeinrichtung 3 auf die (bei der Höhenverstellung hier) ortsfeste Fahreinrichtung 4 zu. Deshalb hängt eine Länge der Beladeeinrichtung 1 und ein Abstand 102 der Fahrkomponenten 103 und 104 in Längsrichtung 11 von der Höhenposition des Beladekopfes 5 ab.

Die Transportpuffereinrichtung 6 dient zum Transport der Säcke 2 von der Zuführeinrichtung 3 zu dem Beladekopf 5 und zum Puffern derselben, wenn bei der Beladung eines Transportmittels 300 wie beispielsweise eines LKW die Säcke 2 lagenweise auf der Ladefläche 301 abgelegt werden. Anschließend wird der Beladekopf 5 um eine Lage nach oben gefahren und es wird das nächste Lagenbild geformt und abgelegt.

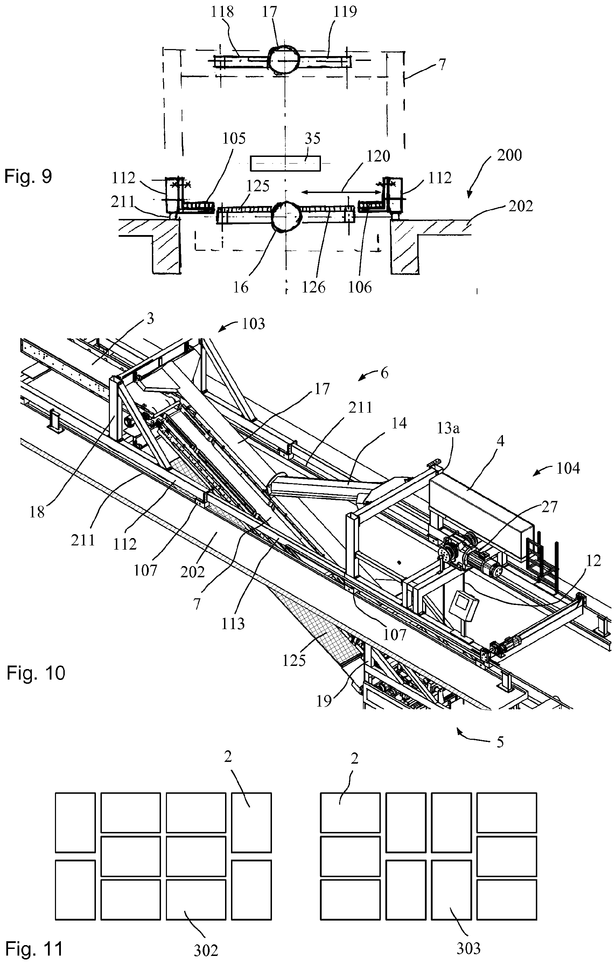

Die Beladeeinrichtung 1 ordnet an dem Beladekopf 5 jeweils fünf bzw. zehn Säcke oder eine andere Anzahl zu einem vollständigen Lagenbild nach einem vorbestimmten Muster, wie es z. B. in Figur 11 dargestellt ist, und legt solche fertigen Lagen nacheinander aufeinander ab, während der Beladekopf 5 von der Ladefläche aus stückweise nach oben gezogen wird. Durch die optional unterschiedliche Orientierung der Säcke 2 innerhalb eines Lagenbilds 302, 303 und durch die aneinander abwechselnden Lagenbilder wird eine "Verzahnung" der Säcke 2 ineinander erreicht, sodass die gestapelten Säcke eine erhebliche Stabilität aufweisen und sich auch zum Transport im LKW ohne Seitenwände eignen. Die Beladeeinrichtung 1 eignet sich aber auch zur Beladung von Transportmitteln 300 mit Seitenwänden.

Die Höhendifferenz zwischen dem Beladekopf 5 und der Zuführeinrichtung 3 wird über die Transportpuffereinrichtung 6 überwunden, die eine parallelogrammartige Tragkonstruktion 7 mit einer daran vorgesehenen Transportstrecke 8 aufweist. Die Transportstrecke 8 weist insgesamt einen (variablen) Neigungswinkel auf, dessen aktueller Wert jeweils von der aktuellen Höhendifferenz zwischen dem Beladekopf 5 und der Zuführeinrichtung 3 abhängt.

Die Transportstrecke 8 weist eine Entkoppelungsstrecke 34 auf, die z. B. über ein Gleitblech und/oder eine (nicht angetriebene) Rollenstrecke und/oder eine Kugelbahn oder dergleichen verfügt oder als eine solche ausgebildet ist. Mit der Entkoppelungsstrecke 34 wird eine Entkoppelung des Sacktransports auf der Zuführeinrichtung 3 von dem Weitertransport innerhalb der Transportpuffereinrichtung 6 erzielt. Entlang der Transportstrecke 8 schließt sich an die Entkoppelungsstrecke 34 ein Transportband 35 an, welches angetrieben ist und die Säcke 2 folglich zwangsweise weiter transportiert. Dabei ist die Transportgeschwindigkeit der Säcke entlang des Transportbandes 35 unabhängig von dem Neigungswinkel 9 der Transportstrecke 8 bzw. der Tragkonstruktion 7. Das bedeutet, dass sowohl bei relativ steilen Neigungswinkeln als auch insbesondere bei relativ flachen Neigungswinkeln zwischen beispielsweise 5° und 30° oder 40° oder mehr die Bewegungsgeschwindigkeit der Säcke 2 stets konstant bleibt. Im Einrichtbetrieb kann der Neigungswinkel auch noch kleiner sein. Ein minimaler und ein maximaler Neigungswinkel 9 hängen von den örtlichen Gegebenheiten ab. Vorzugsweise ist der maximale Neigungswinkel kleiner als 60° und insbesondere kleiner als 45°.

An das Transportband 35 schließt sich eine Pufferstrecke 36 an, die hier im Ausführungsbeispiel wenigstens so lang wie ein Sack 2 und insbesondere wenigstens doppelt so lang, wie ein Sack 2 vorgesehen ist. Hier ist die Pufferstrecke 36 kürzer als die dreifache Länge eines Sacks 2. In anderen Ausgestaltungen sind auch andere Abmessungen möglich, wenn mehr oder weniger Säcke 2 gepuffert werden müssen. Der Neigungswinkel der Pufferstrecke 36 entspricht immer dem Neigungswinkel der Entkoppelungsstrecke 34 und immer auch dem Neigungswinkel des Transportbandes 35, da die Transportstrecke 8 linear ausgebildet ist und einen durchgängigen Neigungswinkel 9 aufweist.

Da sich hier im Ausführungsbeispiel eine Zwischenpufferung von 2 Säcken als vorteilhaft herausgestellt hat, um einen kontinuierlichen Betrieb einer vorgeschalteten Packmaschine zum Füllen der Säcke während des Beladevorgangs zu ermöglichen, umfasst die Pufferstrecke 36 hier etwa 2 Säcke. Die Pufferstrecke 36 kann eine antriebslose Rollenstrecke oder eine antriebslose Rollenbahn oder dergleichen umfassen. Jedenfalls ist an der Pufferstrecke 36 kein ständig umlaufendes Transportband vorgesehen, welches die Staufunktion ausführt und einem erhöhten Verschleiß unterliegen würde, während die Säcke gepuffert werden. Ein solcher erhöhter Verschleiß tritt im Stand der Technik auf und wird hier zuverlässig vermieden.

Reicht der Neigungswinkel 9 der Transportstrecke 8 nicht aus, um durch die Schwerkraft einen Sack 2 auf der Pufferstrecke 36 weiter zu fördern, so wird ein Sack 2 auf der Pufferstrecke 36 durch einen nachfolgenden Sack 2 weiter geschoben, der von dem Transportband 35 auf die Pufferstrecke 36 geschoben wird. So wird sicher gesellt, dass auch bei zu geringen Neigungswinkeln der Transportstrecke 8 dennoch für einen stetigen Nachschub an Säcken 2 gesorgt wird. Da hier gleichzeitig die Pufferstrecke 36 nur zwei oder beispielsweise drei Säcke aufnehmen kann, wird darüber hinaus verhindert, dass sich die Säcke auf der Pufferstrecke aufstauen oder aufwerfen und somit keine definierte Position mehr einnehmen, was insbesondere im Stand der Technik mit Stauförderbändern auftritt, die nach dem Aufstauen unter den Säcken durchrutschen und so einen permanenten Druck auf die Längsachsen oder Säcke ausübt.

Im Stand der Technik wurde für eine Pufferstrecke immer eine Mindestneigung für einen selbsttätigen Transport der Säcke vorgegeben. Das ist bei der Vorrichtung 100 nicht nötig. Für einen automatischen Weitertransport der Säcke sorgt das in gleicher Neigung angeordnete Transportband 35.

An die Pufferstrecke 36 schließt sich der hier in Figur 1 nicht mit Bezugszeichen versehene und unter identischem Winkel angeordnete Zuteilungsförderer 34 an, der die Säcke 2 gezielt an den Beladekopf 5 abgibt.

An der Transportpuffereinrichtung 6 ist eine Koppeleinrichtung 13 vorgesehen, die hier über zwei Koppelstangen 14 verfügt, mit denen die Koppeleinrichtung 13 an die Tragkonstruktion 7 gelenkig gekoppelt ist. Eine gestrichelt dargestellte Versteifungseinrichtung 15 kann vorgesehen sein. Es ist auch möglich, dass die Koppelstangen als Rahmen ausgeführt sind und über die Versteifungseinrichtung 15 Diagonalverbindungen aufweist. Möglich und bevorzugt ist auch eine Variante mit nur einer zentralen Koppelstange 14.

Die Koppeleinrichtung 13 mit der Koppelstange 14 bzw. den Koppelstangen 14 sorgt dafür, dass bei einer Höhenverstellung des Beladekopfes 5 der Beladekopf 5 ortsfest verbleibt, obwohl er über ein Seil 12 als flexibles Element 12 an der Fahreinrichtung 4 gehalten wird.

Die Vorrichtung 100 weist mit der Fahrkomponenten 103 verbundene Wartungsstege 105, 106 auf. Die Wartungsstege 105, 106 sind mitfahrend ausgebildet und bewegen sich synchron mit der Zuführeinrichtung 3 als Fahrkomponente 103 mit. Die Wartungsstege 105, 106 sind auf beiden Längsseiten vorgesehen und sind jeweils an einem Balken bzw. einer Wartungshalterung 110 angebracht.

Eine solche Wartungshalterung 110 kann in einem einfachen Fall ein Balken oder ein rohrartiger Zinken sein, der sich von der einen Fahrkomponente 103 auf die andere Fahrkomponente 104 zu erstreckt oder umgekehrt.

Möglich ist es auch, dass sich von der Fahrkomponente 103 aus eine Wartungshalterung 110 mit einem Wartungssteg 105 in Richtung auf die andere Fahrkomponente 104 erstreckt und dass sich leicht höhenversetzt und/oder kämmend und/oder teleskopierend von der anderen Fahrkomponente 104 aus eine weitere Wartungshalterung 110 mit einem weiteren Wartungssteg 105 in Richtung auf die erste Fahrkomponente 103 erstreckt.

In Figur 1 sind zwei Varianten dargestellt. Durchgezogen dargestellt ist ein rohrartiger Zinken als Wartungshalterung 110, der sich über einen Radsatz am vorderen Ende auf der Schiene 211 an dem Gebäude abstützt. Von der Wartungshalterung 110 aus wird ein hier leicht geneigter Wartungssteg 105 gehalten, dessen Neigung an einen Neigungswinkel 9 der Transportstrecke 8 in der hier dargestellten oberen Position 46 angepasst ist. Der Wartungssteg 105 kann als Gitterrost oder als sonstiger Steg ausgebildet sein und über Haltearme oder Träger oder dergleichen an der Wartungshalterung 110 befestigt sein.

Der mitfahrende Wartungssteg 105 ist fest mit der Zuführeinrichtung 3 verbunden. Der Wartungssteg 105 erstreckt sich in der Längsrichtung 11 wenigstens über einen wesentlichen Teil des Abstandes der zwei Fahrkomponenten 103, 104. Insbesondere erstreckt sich der Wartungssteg 105 in Längsrichtung 11 über wenigstens 66% und vorzugsweise wenigstens 75% des Abstandes der zwei Fahrkomponenten 103, 104. Eine lichter Abstand zu einer der zwei Fahrkomponenten 103, 104 beträgt insbesondere weniger als 1,50 m und insbesondere weniger als 1 m.

Gestrichelt eingezeichnet ist eine bevorzugte Variante, bei der die Wartungshalterung 110 auch als Verbindungseinrichtung 111 dient und die Fahrkomponenten 103 und 104 miteinander verbindet. Da ein Abstand 102 der Fahrkomponenten 103 und 104 in Längsrichtung 11 von der Höhe des Beladekopfes 5 abhängt, kann die Verbindungseinrichtung 111 teleskopierbar sein. Eine Verbindungskomponente 112 kann fest an der Fahrkomponente 103 angebracht sein und in die andere Fahrkomponente 104 eintauchen. Dort kann ein Gleitlager oder eine gleitende Führung 114 vorgesehen sein, an der der jeweils überstehende Teil der Verbindungskomponente 112 aufgenommen und geführt wird. Möglich ist es auch, dass die Verbindungseinrichtung 111 zwei Verbindungskomponenten 112 und 113 umfasst, die als Teleskopstangen miteinander teleskopieren. In einer solchen Ausgestaltung kann jeweils eine Teleskopstange 112, 113 an jeweils einer Fahrkomponente 103, 104 befestigt sein, während die Teleskopstangen 112, 113 in einem Bereich zwischen den Fahrkomponente 103, 104 teleskopierend ineinander geführt sind.

Eine Verbindungseinrichtung 111 hat den weiteren Vorteil, dass von unten auftretende Kräfte, die z. B. über die Transportpuffereinrichtung 6 eingeleitet werden, auf beide Fahrkomponenten 103, 104 verteilt werden. Derartige Kräfte können einwirken, wenn der Beladekopf beim Anheben gegen Kanten oder Gegenstände stößt oder wenn beim Absenken die Ladefläche schon teilweise beladen ist und der Beladekopf in unerwarteter Weise teilweise oder ganz aufsetzt.

An der Verbindungseinrichtung 111 können mitfahrende Wartungsstege 105, 106 angebracht werden, sodass in jeder Längsposition eine Wartung oder Reparatur der Transportstrecke 6 oder des Beladekopfes 5 vorgenommen werden kann. Der Beladekopf 5 muss nur in die obere Position bzw. Wartungsstellung 38 verfahren werden. An der Transportpuffereinrichtung 6 sind Stützstege 125 und 126 ausgebildet. In der oberen Wartungsstellung 38 verbleibt dann zwischen den Wartungsstegen 105 und 106 und den Stützstegen 125 und 126 jeweils nur ein geringer Spalt 109 von einigen Zentimetern. Die Wartungsstege 105, 106 und die Stützstege 125, 126 dienen als gemeinsame Arbeitsplattform 120 und sichern das Wartungspersonal ab, da die verbleibenden Spalte 109 klein genug sind, um Gefahren zu vermeiden.

Zur Wartung oder Reparatur der Vorrichtung 100 ist es nicht nötig, ein separates Gerüst aufzubauen. Es ist auch nicht erforderlich, die Beladeeinrichtung 1 in eine spezielle hintere Wartungsposition zu fahren, um dort eine Wartung durchzuführen. Eine zusätzliche spezielle Wartungsposition kann aber vorgesehen sein.Figur 2 zeigt eine Vorderansicht der Vorrichtung 100 mit der Beladeeinrichtung 1. Dabei ist die Aussparung 203 in der Zuführebene 202 der Trägereinrichtung bzw. des Gebäudes 200 zu erkennen. Der Beladekopf 5 ragt von oben in die Aussparung 203 hinein bzw. durch diese nach unten hin durch. In seitlichen Bereichen ist oben die Koppeleinrichtung 13 mit den Koppelstangen 14 zu erkennen, die dafür sorgen, dass bei einer Höhenverstellung des Beladekopfes 5 eine Längsverschiebung der Zuführeinrichtung 3 erfolgt, während der Beladekopf 5 in Längsrichtung 11 ortsfest verbleibt.

Die Wartungsstege 105, 106 sind an der Wartungshalterung 110 hängend erkennbar. In dem Bereich, wo sich die Wartungsstege 105, 106 hinter dem Beladekopf 5 befinden, sind die entsprechenden Bereiche gestrichelt eingezeichnet, ebenso wie die Stützstege 125 und 126. Dazwischen verbleiben kleine Spalte 109, die so gewählt werden, dass eine Kollision sicher ausgeschlossen wird und dass keine Gefahr beim Arbeiten auf der so entstandenen Wartungsplattform 120 besteht.

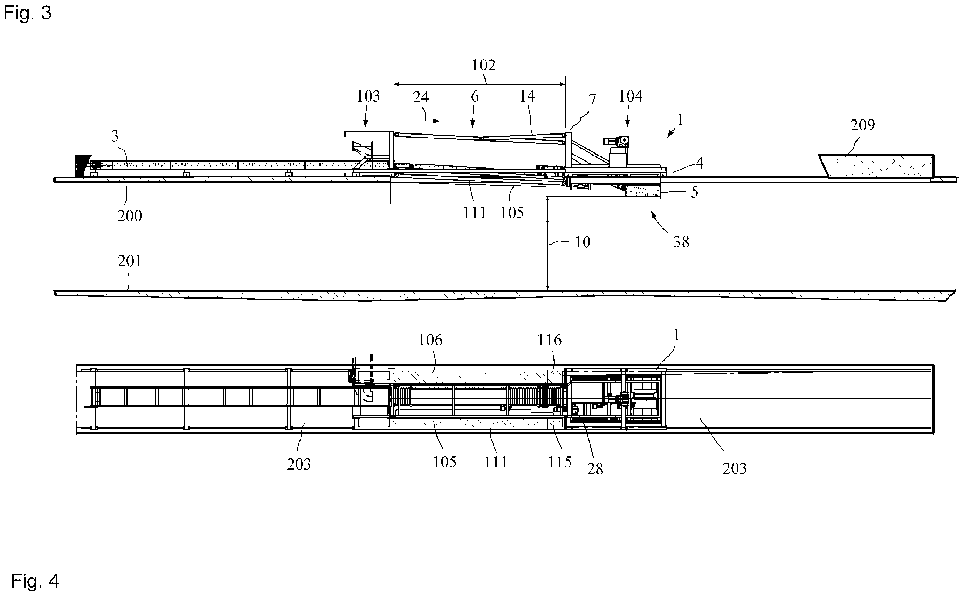

Figuren 3 und 4 zeigen eine Seitenansicht und eine Draufsicht auf die Vorrichtung 100 an der Trägereinrichtung 200. Die Säcke 2 werden über die Zuführeinrichtung 3 entlang der Förderrichtung 24 zu der Transportpuffereinrichtung 6 und entlang dieser zu dem Beladekopf 5 gefördert. Die Transportpuffereinrichtung umfasst die Tragkonstruktion 7, die an die Koppeleinrichtung 13 gekoppelt ist.

Die Beladeeinrichtung 1 ist hier in der oberen Wartungsstellung 38 abgebildet, in der der Beladekopf 5 bis in die Aussparung 203 in der Zuführebene bzw. Decke 202 der Trägereinrichtung 200 hoch gezogen ist.

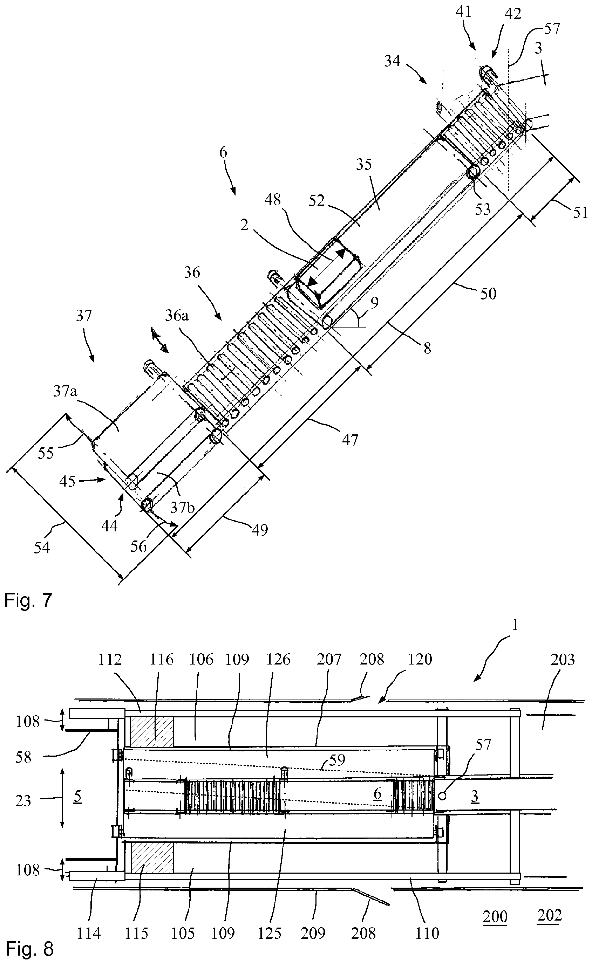

In der Draufsicht gemäß Figur 4 sind neben der Transportpuffereinrichtung 6 die Wartungsstege 105, 106 erkennbar, die hier seitlich an den Verbindungseinrichtungen 111 angebracht sind. Zusätzlich sind Stützstege 124, 125 an der Transportpuffereinrichtung 6 vorgesehen (Vgl. Fig. 8), sodass die verbleibenden Spalte 109 das aus Arbeitsschutzgründen zulässige Maß nicht überschreiten.

Die Stege 105, 106 und 125, 126 auf beiden Seiten der Transportpuffereinrichtung 6 werden als Plattform genutzt, um Wartungsarbeiten an der Transportpuffereinrichtung 6 durchzuführen. Die Gefahr eines Durchfallens durch etwaige Spalte wird durch die Wartungs- und Stützstege sicher verhindert. Um die Aussparung 203 abzusichern, ist ein Zaun 209 vorgesehen, der zum Betreten entsprechende Türen 208 aufweisen kann.

Der Abstand 102 der Zuführeinrichtung 3 von der Fahreinrichtung 4 hängt von der Höhe des Beladekopfes 5 ab und ist in Fig. 3 maximal, da sich der Beladekopf 5 in der oberen Wartungsstellung 38 befindet. Die Wartungsstege 105, 106 können verlängerbar sein, damit sich die Wartungsstege 105, 106 in der oberen Wartungsstellung 38 bis dicht an den Beladekopf 5 heran erstrecken. Im Bedarfsfall können gegebenenfalls Wartungsabschnitte 115, 116 von den Wartungsstegen 105, 106 abgeklappt oder daraus herausgezogen werden, um den verbleibenden Abstand abzudecken. Mit einem Wartungsabschnitte kann die effektive Länge eines Wartungsstegs an den Abstand 102 der Fahrkomponenten angepasst werden und 80% oder 90% oder mehr des Abstandes 102 erreichen.

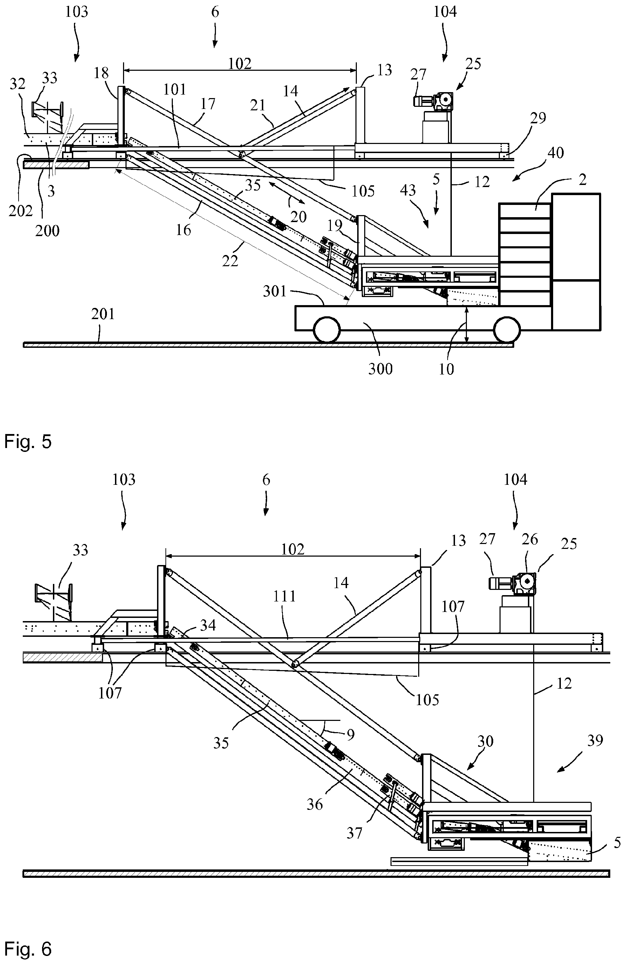

Figur 5 zeigt eine vergrößerte Seitenansicht der Beladeeinrichtung 1 an der Trägereinrichtung 200 und insbesondere die Transportpuffereinrichtung 6 im Beladezustand. Stark schematisch ist ein Transportmittel in Form eines LKW 300 abgebildet, auf dessen Ladefläche 301 ein erster Sackstapel mit Säcken 2 gestapelt ist. Der Beladekopf 5 legt nun eine zweite Lage hinter der ersten Lage ab. Im Betriebsablauf wird der Beladekopf 5 nach der Ablage eines Lagenbildes 302, 303 (vgl. Figur 11) jeweils stückweise an dem flexiblen Element 12 über das Hubwerk 25 mit dem Hubmotor 27 nach oben gezogen, um die nächste Lage passgenau abzulegen. Wenn eine Stapelhöhe von beispielsweise 7 Säcken erreicht wird, wird die Beladeeinrichtung 1 ein entsprechendes Stück zurück bewegt und der Beladekopf 5 wird wieder bis auf die Ladefläche 301 abgesenkt, um das nächste Lagenbild direkt auf der Ladefläche 301 abzulegen.

Der LKW 300 fährt auf der Transportfläche 201, die beispielsweise der Boden des Gebäudes 200 sein kann. Auf der Zuführebene 202, die beispielsweise eine Decke des Gebäudes 200 sein kann, ist die Zuführeinrichtung 3 verfahrbar angeordnet. Durch die Aussparung 203 in der Zuführebene 202 erstreckt sich die Transportpuffereinrichtung 6 von oberhalb der Zuführebene 202 aus durch die Aussparung 203 nach unten, wo sich im Beladezustand der Beladekopf 5 befindet. Die Transportstrecke 7 ist linear ausgebildet und weist über die Entkopplungsstrecke 34, das Transportband 35 und die Pufferstrecke 36 sowie den Zuteilungsförderer 37 eine gleichförmige Neigung auf. Der Neigungswinkel 9 hängt von der Arbeitshöhe des Beladekopfes 5 ab.

Die Transportpuffereinrichtung 6 weist eine Tragkonstruktion 7 auf, die parallelogrammartig ausgebildet ist und einen ersten Anschlussrahmen 18 aufweist, der an die Zuführeinrichtung 3 grenzt und der einen zweiten Anschlussrahmen 19 aufweist, der an dem Beladekopf 5 angrenzt. Die Anschlussrahmen 18 und 19 sind über einen unteren Längsverbinder 16 und einen oberen Längsverbinder 17 gelenkig miteinander verbunden.

Die Tragkonstruktion 7 weist eine Länge 22 auf, die etwa auch der Länge der Längsverbinder 16 und 17 entspricht (+/- 10%). In einem mittleren Bereich 20 des oberen Längsverbinders 17 ist eine Koppelstange 14 der Koppeleinrichtung 13 an den Längsverbinder 17 angekoppelt. Insbesondere ist die Koppelstange 14 mit ihrem Koppelpunkt in der Mitte des Längsverbinders 17 angekoppelt. Die Länge 21 der Koppelstange 14 entspricht insbesondere der halben Länge des Längsverbinders 17 (+/- 10%).

Klar erkennbar ist in Figur 5, dass der Zuführeinrichtung 3 über eine Übergabeeinrichtung 33 die Säcke 2 zugeführt werden, die beispielsweise von einer Packmaschine gefüllt und zu der Beladeeinrichtung 1 transportiert werden. Die Übergabeeinrichtung 33 legt die Säcke 2 von oben auf die Zuführeinrichtung 3 ab. Die Zuführeinrichtung 3 ist gegenüber der Übergabeeinrichtung 33 längsverstellbar. Auch bei unterschiedlichen Längspositionen der Zuführeinrichtung 3 ist eine zuverlässige Übergabe an die Beladeeinrichtung 1 gesichert.

In der Seitenansicht ist ein flexibles Element 12 sichtbar. Zur Sicherung sind zwei hintereinander liegende Seile 12 vorgesehen, damit auch beim Reißen eines Seiles für die nötige Sicherheit gesorgt wird. Das flexible Element 12 kann auch als umlaufender Zahnriemen ausgeführt sein.

Die Ladefläche 301 befindet sich hier in einer Höhe 10 oberhalb der Transportfläche 201. Die Transportfläche 201 kann insbesondere der Boden des Gebäudes oder aber auch die Wasseroberfläche bei Beladung von Schiffen sein.

Während Figur 5 die Beladeposition 40 darstellt, zeigt Figur 6 den gleichen Ausschnitt wie Figur 5 in der unteren Wartungsstellung 39. In dieser Stellung ist der Beladekopf 5 bis kurz oberhalb der Transportfläche 201 bzw. des Bodens abgesenkt. Gegebenenfalls ist es auch möglich, den Beladekopf 5 ganz auf die Transportfläche 201 abzusenken. Jedenfalls ist die Höhe des Beladekopfes 5 so gering, dass eine komfortable Reparatur oder Wartung des Beladekopfes 5 möglich ist, z. B. wenn größere oder kleinere Komponenten z. B. ein Gurt oder andere Verschleißteile gewechselt werden müssen. Solche Maßnahmen können durchgeführt werden, ohne ein Gerüst aufbauen zu müssen.

In jeder beliebigen Längsposition kann ohne Entfernung des Transportmittels der Beladekopf 5 nach oben verfahren werden, um einen festgeklemmten Sack oder einen defekten Sack aus dem Beladekopf 5 entfernen zu können. Eine solche obere Wartungsstellung 38 oder obere Stellung zeigt Fig. 1. Um die Zugänglichkeit zu der Transportpuffereinrichtung zu erleichtern, können an den unteren Längsverbindern klappbare oder einhängbare Wartungsstege vorgesehen sein, um die Transportpuffereinrichtung gefahrlos zu erreichen. An dem Beladekopf 5 kann eine Einstiegshilfe vorgesehen sein, die es ohne große Höhendifferenz ermöglicht, den Beladekopf zu betreten.

Figur 7 zeigt eine stark schematische perspektivische Darstellung der Transportpuffereinrichtung 6. Die Transportpuffereinrichtung 6 übernimmt an einem Puffereingang 41 auf einer Aufgabehöhe 42 die durch die Zuführeinrichtung 3 zugeführten Säcke 2. Die Transportstrecke 8 weist entlang der Transportpuffereinrichtung 6 zunächst eine Entkoppelungsstrecke 34 über eine Länge 51 auf. Die Entkoppelungsstrecke 34 weist hier eine antriebslose Rollenstrecke oder dergleichen auf. An die Entkoppelungsstrecke 34 schließt sich ein (angetriebenes) Transportband 35 an, auf dem hier beispielhaft ein Sack 2 mit einer Länge 48 eingezeichnet ist. Das Transportband 35 wird über Transportwalzen 53 umgelenkt und umfasst einen Transportriemen oder einen Transportgurt 52, auf dem die Säcke 2 aufliegen. An das Transportband 35 schließt sich die antriebslose Pufferstrecke 36 an, die als Rollenstrecke 36a oder Rollenbahn ausgeführt ist, aber auch über eine Gleitbahn mit einem Gleitblech oder dergleichen verfügen kann. An der Pufferstrecke 36 werden die Säcke 2 gepuffert, um einen Zeitausgleich zwischen der kontinuierlich arbeitenden Packmaschine und der benötigten Pufferzeit beim Versetzen des Beladekopfes von einer Ebene zur anderen Ebene oder in Längsrichtung zu ermöglichen.

Die Säcke 2 gleiten hier regelmäßig durch Schwerkraft bedingt über die Pufferstrecke 36 zu dem Zuteilungsförderer 37 oder sie werden bei zu geringem Neigungswinkel durch nachfolgende Säcke 2 zu dem Zuteilungsförderer 37 geschoben. Der Zuteilungsförderer 37 umfasst hier ein oberes Band 37a und ein unteres umlaufendes Band 37b, die den Sack 2 von oben und unten gezielt antreiben bzw. stoppen. Am Auslauf des Zuteilungsförderers 37 werden die Säcke am Pufferausgang 44 auf einer Abgabehöhe 45 abgegeben. Der Zuteilungsförderer 37 erstreckt sich über eine Länge 49, während die Pufferstrecke 36 eine etwas größere Länge 47 aufweist, die wenigstens doppelt so lang ist, wie die Länge der typischerweise zu verarbeitenden Säcke 2. Die Transportpuffer¬einrichtung 6 ist insgesamt hier unter einem Neigungswinkel 9 dargestellt, der von dem Bearbeitungsfortschritt abhängt. Das Transportband 35, die Pufferstrecke 36 und der Zuteilungsförderer 37 weisen zu jedem Zeitpunkt einen gemeinsamen Neigungswinkel 9 auf.

Der Zuteilungsförderer 37 kann in anderen Ausgestaltungen auch als einfache Klappe ausgeführt sein.

Der Beladekopf 5 kann insgesamt in Querrichtung 23 verstellbar ausgeführt sein. Vorzugsweise ist aber nicht der ganze Beladekopf, sondern nur ein hier unteres Kopfteil 58 seitlich verstellbar vorgesehen. Das Kopfteil 58 kann hier in Querrichtung 23 um bis zu +/- 200 mm (oder auch 300 mm) verfahren werden, sodass sich insgesamt ein Verstellweg von 400 mm (600 mm) ergibt. Je nach Anwendungsfall können auch größere und kleinere Verstellwerte möglich und sinnvoll sein.

Hier dient die seitliche Verstellung des Kopfteils 58 insbesondere dazu, eine in Querrichtung 23 ungenaue Positionierung eines LKW oder sonstigen Transportmittels 300 einfach ausgleichen zu können. Anstatt das Transportmittel 300 zeitaufwendig neu auszurichten, kann auch der Beladekopf 5 bzw. dessen Kopfteil 58 zur Seite verfahren werden, um hier bis zu 200 mm außermittigen Versatz auszugleichen. Deshalb ist die Transportpuffereinrichtung 6 inklusive seitlicher Stützgitter 125, 126 vorzugsweise schmaler ausgebildet, als eine Breite des Beladekopfes 5 in der (mittleren) Grundposition.

Besonders bevorzugt ist die Transportpuffereinrichtung 6 so schmal ausgebildet, dass bei einer maximalen Seitenverstellung des Kopfteils 58 in beide seitlichen Richtungen die Transportpuffereinrichtung 6 nicht weiter nach außen ragt als das Kopfteil 58 auf beiden Seiten. Dadurch ist gewährleistet, dass auch bei Beladung von Transportmitteln mit Seitenwänden eine zuverlässige Beladung der Ladefläche 301 bis zur Seite hin möglich ist. Würde die Transportpuffereinrichtung 6 seitlich über den Beladekopf 5 bzw. das verstellbare Kopfteil 58 überstehen, so könnte die Transportpuffereinrichtung 6 bzw. das daran überstehende Teil mit der Seitenwand des Transportmittels 300 kollidieren.

Um den Beladekopf 5 in die Aussparung 203 in dem Gebäude bzw. der Trägereinrichtung 200 nach oben zu bewegen, muss die Aussparung breiter ausgeführt werden als der Beladekopf 5, der wiederum breiter ist, als die Transportpuffereinrichtung 6. Dadurch würden ohne die Wartungsstege 105, 106 seitliche Lücken an der Aussparung 203 verbleiben, was zu erheblichen Beeinträchtigungen der Arbeitssicherheit bei Wartungsarbeiten ohne Gerüst führen könnte. Wenn zusätzlich das Kopfteil 58 noch seitlich verstellbar ist, muss die Aussparung 203 nochmals breiter ausgestaltet werden, wenn der Beladekopf 5 in jeder Position nach oben in die Aussparung 203 bewegt werden soll, da ein entsprechend überstehendes Kopfteil 58 berücksichtigt werden muss. Es ist von Vorteil, wenn der Beladekopf 5 in jeder seitlichen Stellung nach oben in die Wartungsposition 38 verfahren werden kann, um beispielsweise Blockaden auch der seitlichen Verstellmechanik des Kopfteils 58 aufheben zu können.

Die Wartungsstege 105, 106 stellen insbesondere in Kombination mit den Stützstegen 125, 126 an der Transportpuffereinrichtung 6 eine sichere Arbeitsplattform 120 zur Verfügung.

Die Transportstrecke 8 ist hier um die gestrichelt eingezeichnete Achse 57 verschwenkbar vorgesehen. Die Achse 57 kann vertikal ausgerichtet sein oder aber z. B. etwa senkrecht zu der Transporteinrichtung 6 ausgerichtet sein. Die Transportstrecke 8 wird auf und gegenüber der Transportpuffereinrichtung 6 verschwenkt, sodass das untere Ende der Transportstrecke 8 um den Schwenkbereich 56 bzw. 57 nach rechts bzw. links verschwenkt werden kann. Dadurch wird auch bei einer Seitenverstellung des Kopfteils 58 der Übergabepunkt der Säcke 2 relativ zu dem Kopfteil 58 konstant gehalten. Dadurch muss bei einer Seitenverstellung des Kopfteils 58 die Lagenbildung aus den einzelnen Säcken nicht relativ geändert werden. Insgesamt kann sich der Pufferausgang 44 über die Breite 54 erstrecken.Figur 8 zeigt eine Draufsicht auf den Bereich der Transportpuffereinrichtung 6 der Beladeeinrichtung 1 in der oberen Wartungsstellung 38. An dem Gebäude 200 mit der Zuführebene 202 ist der Zaun 209 mit Türen 208 vorgesehen, um den Zugang zu der Aussparung zu versperren.

Das Kopfteil 58 des Beladekopfes 5 ist in beide Querrichtungen 23 jeweils um den Verstellweg 108 verstellbar. Bei einer seitlichen Verstellung des Kopfteils 58 wird die Transportstrecke 8 um die Achse 57 verschwenkt, sodass das untere Ende der Transportstrecke 8 dem Kopfteil 58 folgt und der Übergabepunkt der Säcke 2 an den Beladekopf 5 praktisch unverändert bleibt. In Figur 8 ist die verschwenkte Transportstrecke 8 gestrichelt eingezeichnet. Die Stützstege 124, 125 verbleiben aber zusammen mit der Transportpuffereinrichtung 6 ortsfest, sodass keine Kollision mit den Wartungsstegen 104, 105 erfolgt und die Spalte 109 konstant bleiben. Schraffiert eingezeichnet sind hier abgeklappte Wartungsabschnitte 115, 116, die in Längsrichtung 11 an den Wartungsstegen 105, 106 abgeklappt werden, um die Wartungsstege 105, 106 bis dicht vor den Beladekopf 5 zu verlängern. Da sich mit der Höhe des Beladekopfes 5 der Abstand 102 der beiden Fahrkomponenten 103, 104 ändert und dieser in der oberen Wartungsstellung 38 am größten ist, kann ein sonst verbleibender Längsspalt durch abklappbare oder ausziehbare Wartungsabschnitte 115, 166 überbrückt und abgedeckt werden.

Figur 9 zeigt eine schematische Vorderansicht 100 der Trägereinrichtung 200 mit den Schienen 211 auf der durch eine Decke des Gebäudes gebildeten Zuführebene 202. An der Zuführeinrichtung 3 sind Teleskopstangen 112 befestigt, an den mitfahrende Wartungsstege 105, 106 angebracht sind. An der Transportpuffereinrichtung 6 sind wiederum Stützstege 125, 126 angebracht, die in der hier abgebildeten oberen Wartungsstellung 38 zusammen mit den Wartungsstegen 105, 106 jeweils eine gemeinsame Wartungsplattform 120 bilden. Zwischen den Stegen verbleiben nur geringe Spalte 109, die so gering ausgeführt werden können, da davon bei Wartungsarbeiten keine Gefahr bezüglich der Arbeitssicherheit besteht. Die verbleibenden Spalten 109 sind jedenfalls so klein, dass ein Durchfallen von nur sehr kleinen Gegenständen, nicht aber von Personen, möglich ist, sodass sie den entsprechenden Sicherheitsvorschriften entsprechen.

In Figur 9 ist eine Abwandlung der Transportpuffereinrichtung 6 dargestellt, bei der die Transportpuffereinrichtung 6 einen oberen rohrartigen Längsverbinder 16 und einen unteren rohrartigen Längsverbinder 17 umfasst. Die rohrartigen Längsverbinder 16, 17 weisen Durchmesser zwischen etwa 80 mm und 500 mm oder mehr auf, sodass sie eine hohe Torsionssteifigkeit zur Verfügung stellen. Die rohrartigen Längsverbinder 16, 17 sind über Knotenbleche 118, 119 mit den Anschlusselementen in Form von Anschlussrahmen 18, 19 verbunden, sodass sich eine parallelogrammartige Struktur ergibt.

Figur 10 zeigt nochmals eine schematische perspektivische Darstellung der Transportpuffereinrichtung 6 nach Figur 9 mit der Tragkonstruktion 7 und der Koppeleinrichtung 13 mit hier einer einzigen rohrförmigen Koppelstange 14 die an einem Ende schwenkbar mit dem oberen Längsverbinder 17 und an dem anderen Ende schwenkbar mit dem Anschlussrahmen bzw. Anschlusselement 13a der Koppeleinrichtung 13 gekoppelt ist.

Zwischen den Fahrkomponenten 103 und 104 erstreckt sich auf jeder Längsseite oberhalb der Schienen 211 jeweils eine Verbindungseinrichtung 111 mit zwei teleskopierbaren Verbindungskomponenten 112 und 113. Die Verbindungskomponente 112 ist über einen Radsatz 107 an der Schiene 211 verfahrbar geführt. An der Verbindungseinrichtung 111 hängt jeweils ein Wartungssteg 105, 106, der hier in dieser Darstellung verdeckt ist. Im unteren Bereich ist der Stützsteg 125 an der Transportpuffereinrichtung 6 zu sehen, der sich unterhalb der Transportstrecke 8 erstreckt. Die Transportpuffereinrichtung 6 bildet mit den senkrechten Anschlussrahmen 18 und 19 und den rohrartigen Längsverbindern 16 und 17 eine Parallelogrammstruktur als Tragkonstruktion 7, an der der Beladekopf 5 horizontal geführt wird. Höhenverstellbar wird der Beladekopf 5 über das Seil 12 an der Fahreinrichtung 4 gehalten. Eine Höhenverstellung erfolgt über den Hubmotor 27.

Die Verbindungseinrichtung 111 dient zum Tragen der Wartungsstege 105, 106. Außerdem nimmt die Verbindungseinrichtung 111 Kräfte auf, die sich wenigstens teilweise nach oben erstrecken. Solche Vertikalkräfte können entstehen, wenn der Beladekopf 5 schief auf einer Ladefläche 301 aufsetzt, wenn dort z. B. schon ein einzelner Sack oder ein anderer Gegenstand liegt. Je nach Auftreffwinkel und Auftreffort, können dadurch unterschiedliche Kräfte über die Transportpuffereinrichtung auf die Zuführeinrichtung 3 übertragen werden. Dabei können auch erhebliche Kraftanteile in vertikaler Richtung entstehen. Durch die die Fahrkomponenten 103 und 104 in vertikaler Richtung koppelnde Verbindungseinrichtung 111 können Vertikalkräfte auf beide Fahrkomponenten 103 und 104 abgeleitet werden, wobei die Verbindungseinrichtung 111 als Hebel von der Fahrkomponente 103 auf die Fahrkomponente 104 wirkt, wodurch ein Abheben einer der Fahrkomponente 103 von der Schiene 211 zuverlässig vermieden wird.

Figur 11 zeigt schließlich zwei mögliche unterschiedliche Lagenbilder 302 und 303 aus Säcken 2 die abwechselnd aufeinander gestapelt werden, um durch ein Ineinandergreifen und Überlappen einzelner Sackteile einen festeren Verbund und eine festere Lagenstruktur zu erreichen, die ausreicht, um auch Transportmittel ohne Seitenwände mit Stapeln aus Säcken 2 sicher zu laden. Die einzelnen Säcke sind der besseren Übersichtlichkeit halber beabstandet voneinander dargestellt, weisen aber beim Ablegen keinen Abstand zueinander auf oder werden anschließend noch auf dem Beladekopf dicht aneinander geschoben.

Insgesamt verarbeitet die Beladeeinrichtung bzw. der Beladekopf 5 während der Lagenbildung kontinuierlich die einlaufenden Säcke 2. Das ist mit einer Sackleistung von hier 3000 Sack pro Stunde möglich, wobei beispielsweise mit Zement gefüllte Säcke mit einem Füllgewicht vom 50 kg mit dieser Leistung verarbeitet werden können. Für einen Lagenwechsel bedarf es im konkreten Beispiel einer Zeit von ca. 2 bis 3 Sekunden, in der die vorgeschaltete Packmaschine nicht gestoppt werden sollte. Deshalb müssen etwa 2 bis 3 einlaufende Säcke zwischen gepuffert werden. In einem konkreten Beispiel besteht die Entkoppelungsstrecke 34 zu Beginn der Transportpuffereinrichtung 6 aus einer einer Sacklänge entsprechenden Schwerkraftrollenbahn, einem sich daran anschließenden angetriebenen Gurtförderer und einer weiteren etwa 2 Sacklängen langen Schwerkraftrollenbahn. Die gesamte Puffer- bzw. Staustrecke arbeitet abhängig von der aktuellen Ladehöhe auf beispielsweise einem LKW in unterschiedlichen Neigungswinkeln von typischerweise etwa 10 bis 30°. Die zu puffernden Säcke 2 laufen durch die Transportpuffereinrichtung 6 durch, ohne dass jemals der Gurtförderer bzw. das Transportband 35 unter einem gestoppten Sack hindurchlaufen muss. Beim Wiederbeschleunigen durch den Zuteilungsförderer 37 beschleunigen die Säcke 2 gezielt. Dem Zuteilungsförderer 37 werden die Säcke auf der Pufferstrecke durch ihr Eigengewicht bei einer entsprechenden Neigung zu geführt oder sie erhalten einen Impuls durch den nachfolgenden vom Gurtförderer angetriebenen Sack, sofern die Neigung der Pufferstrecke 36 zu gering ist.

Die Beladeeinrichtung 1 stellt einen höhenverstellbaren Beladekopf 5 zur Verfügung, der sich in seiner Längsposition auch bei einer Höhenverstellung nicht verschiebt, obwohl er nur über z. B. 1 oder 2 Seile an der darüber angeordneten Fahreinrichtung 4 gehalten wird. Das wird durch die Koppeleinrichtung 13 bewirkt, die dafür sorgt, dass die Zuführeinrichtung 3 bei Höhenverstellungen des Beladekopfes 5 längsverstellt wird. Ein weiterer Vorteil dieser Konstruktion ist, dass nur ein Hubmotor verwendet werden muss, der zudem eine Drehbewegung ausführt und das den Beladekopf haltende Seil 12 entweder auf- oder abwickelt. Das ist vorteilhaft, da Linearbewegungen in diesen rauen und oft mit Staub oder Schmutz belasteten Umgebungen stets mit erhöhtem Verschleiß einhergehen.

Die Parallelogrammkonstruktion 7 an der Transportpuffereinrichtung 6 erlaubt in Kombination mit dem Transportband und der Pufferstrecke 36 und dem Zuteilungsförderer 37 einen wartungsarmen Betrieb. Ein unter wartenden Säcken 2 durchschleifender Gurt eines Transportbandes kann weitestgehend oder sogar vollständig vermieden werden.

Dadurch, dass der Beladekopf 5 und die Transportpuffereinrichtung in jeder Längsstellung in die obere Wartungsstellung gefahren werden können, wird eine einfachere Reparatur und Wartung der Beladeeinrichtung 1 ermöglicht. Einfachere Wartungen oder Wartungen bei Bedarf sind auch in der unteren Wartungsstellung 39 effektiv möglich, die auf dem Boden bzw. der Transportfläche 201 oder geringfügig darüber ermöglicht werden. Ein Aufbau eines Gerüstes oder dergleichen ist nicht nötig. In der oberen Wartungsstellung 38 kann ein Transportband der Transportpuffereinrichtung 6 oder ein sonstiges Transportband nach oben geklappt werden, um den Gurt auszutauschen. Dadurch wird die Wartungszeit nochmals erheblich verkürzt.

Die Fahreinrichtung 4 kann über einen daran angeordneten Antrieb 28 verfügen. Es ist auch möglich, dass ein externer Antrieb vorgesehen ist, der ein umlaufendes Seil oder dergleichen antreibt. Möglich ist auch ein Zahnriemenantrieb um z. B. ein etwaiges Spiel im Antriebsstrang auszugleichen. Deshalb oder aus anderen Gründen kann eine Feststellbremse an der Fahreinrichtung 4 vorgesehen sein. Eine solche Feststellbremse kann z. B. als Schienenzange ausgeführt sein.

Insgesamt kann die Größe des Gebäudes 200 verringert werden, da nicht eine derartige Bauhöhe wie im Stand Technik erforderlich ist. Es werden nämlich keine Hubstangen nach oben gefahren, wenn der Beladekopf 5 höhenverstellt wird. Dadurch kann die Bauhöhe oberhalb der Zuführebene 202 verringert werden, was die Bau- und Investitionskosten verringert.

**Bezugszeichenliste:**

| | | | |
|---|---|---|---|
| 1 | Beladeeinrichtung | 41 | Puffereingang |
| 2 | Sack | 42 | Aufgabehöhe |
| 3 | Zuführeinrichtung | 43 | Bearbeitungsfortschritt |
| 4 | Fahreinrichtung | 44 | Pufferausgang |
| 5 | Beladekopf | 45 | Abgabehöhe |
| 6 | Transportpuffereinrichtung | 47-51 | Länge |
| | | 52 | Transportriemen |
| 7 | Tragkonstruktion | 53 | Transportwalzen, Umlenktrommel |
| 8 | Transportstrecke | | |
| 9 | Winkel, Neigungswinkel | 54 | Breite |
| 10 | Höhe | 55,56 | Schwenkbereich |
| 11 | Längsrichtung | 57 | Drehachse |
| 12 | flexibles Element, Seil | 58 | Kopfteil |
| 13 | Koppeleinrichtung | 100 | Vorrichtung |
| 13a | Anschlusselement | 102 | horizontaler Abstand |
| 14 | Koppelstange | 103,104 | Fahrkomponente |
| 15 | Versteifungseinrichtung | 105,106 | Wartungssteg |
| 16, 17 | Längsverbinder, Rohr | 107 | Radsatz |
| 18, 19 | Anschlussrahmen | 108 | Verstellweg |
| 20 | mittlerer Bereich | 109 | Spalt |
| 21,22 | Länge | 110 | Wartungshalterung |
| 23 | Querrichtung | 111 | Verbindungseinrichtung |
| 24 | Förderrichtung | 112, 113 | Verbindungskomponente |
| 25 | Hubwerk | 115, 116 | Wartungsabschnitt |
| 26 | Seilrolle | 118,119 | Knotenblech |
| 27 | Hubmotor | 120 | Arbeitsplattform |
| 28 | Antrieb | 125, 126 | Stützsteg |
| 29 | Bremseinrichtung | 200 | Trägereinrichtung, Gebäude |
| 30 | Verteileinrichtung | | |
| 32 | Zuführband | 201 | Transportfläche |
| 33 | Übergabeeinrichtung | 202 | Zuführebene |
| 34 | Entkopplungsstrecke | 203 | Aussparung |
| 35 | Transportband | 208 | Tür |
| 36 | Pufferstrecke | 209 | Zaun |
| 36a | Rollenstrecke, Rollenbahn | 211 | Schiene |
| 37 | Zuteilungsförderer | 300 | Transportmittel, LKW |
| 37a | oberes Band | 301 | Ladefläche |
| 37b | unteres Band | 302,303 | Lagenbild |
| 38,39 | Wartungsstellung | | |
| 40 | Beladeposition | | |

## Patentansprüche

1. Vorrichtung (100) umfassend eine längsbewegliche Beladeeinrichtung (1) zum Beladen von Ladeflächen (301) von auf einer Transportfläche (201) beweglichen Transportmitteln (300) mit Säcken (2) oder anderen Stückgütern,
wobei die Beladeeinrichtung (1) wenigstens zwei auf einer Zuführebene (202) anzuordnende und in eine Längsrichtung (11) verfahrbare und voneinander beabstandete Fahrkomponenten (103, 104) umfasst, wovon eine erste der Fahrkomponenten (103) als Zuführeinrichtung (3) zur Zufuhr der Säcke (2) ausgebildet ist
und wobei eine zweite der Fahrkomponenten (104) eine Fahreinrichtung (4) mit einem höhenverstellbar daran gehaltenen Beladekopf (5) zur Abgabe der Säcke (2) bildet, wobei die Zuführeinrichtung (3) mit dem Beladekopf (5) über eine Transportpuffereinrichtung (6) verbunden ist,
wobei mit einer der Fahrkomponenten (103, 104) wenigstens ein mitfahrender Wartungssteg (105, 106) fest verbunden ist, welcher sich in der Längsrichtung (11) wenigstens über einen wesentlichen Teil des Abstandes (102) der zwei Fahrkomponenten (103, 104) erstreckt,
**dadurch gekennzeichnet,**
**dass** an der Transportpuffereinrichtung (6) wenigstens ein sich seitlich nach außen erstreckender Stützsteg (125, 126) ausgebildet ist, welcher in einer oberen Position (46) des Beladekopfes (5) zusammen mit dem Wartungssteg (105, 106) eine gemeinsame Arbeitsplattform (120) für Wartungs- und Reparaturzwecke zur Verfügung stellt.

2. Vorrichtung (100) nach Anspruch 1, wobei der Wartungssteg (105, 106) an einer Wartungshalterung (110) befestigt ist, welcher an der Zuführeinrichtung (3) befestigt ist.

3. Vorrichtung (100) nach einem der vorhergehenden Ansprüche, wobei der Wartungssteg (105, 106) an einer wenigstens zwei teleskopierbare Verbindungskomponenten umfassenden Verbindungseinrichtung (111) befestigt ist, wobei die Verbindungseinrichtung (111) an den zwei Fahrkomponenten (103, 104) aufgenommen und mit wenigstens einer der beiden Fahrkomponenten (103) fest verbunden und in sich teleskopierbar ist, sodass bei einer Höhenverstellung des Beladekopfes (5) die zwei teleskopierbaren Verbindungskomponenten (112,113) miteinander teleskopieren.

4. Vorrichtung (100) nach einem der vorhergehenden Ansprüche, wobei sich an beiden Längsseiten der Beladeeinrichtung (1) jeweils wenigstens eine Verbindungseinrichtung (111) von der Zuführeinrichtung (3) bis zu der Fahreinrichtung (4) erstreckt.

5. Vorrichtung (100) nach einem der vorhergehenden Ansprüche, wobei der Beladekopf (5) in Querrichtung (23) verstellbar ist und wobei die Transportpuffereinrichtung (6) eine in der Querrichtung (23) entsprechend verschwenkbare Transportstrecke (8) zum Transport der Säcke (2) aufweist, wobei die Transportstrecke (8) mit der Zuführeinrichtung (3) und dem Beladekopf (5) gekoppelt ist, um eine Verstellung des Beladekopfes (5) in der Querrichtung (23) auszugleichen.

6. Vorrichtung (100) nach dem vorhergehenden Anspruch, wobei sich der Stützsteg an der Transportpuffereinrichtung (6) so weit in der Querrichtung (23) erstreckt, wie eine maximale Auslenkung der Transportstrecke (8) bei der seitlichen Verschwenkung der Transportstrecke (8).

7. Vorrichtung (100) nach Anspruch 5 oder 6, wobei eine Breite der Transportpuffereinrichtung (6) um wenigstens den doppelten maximalen Verstellweg (108) des Beladekopfes (5) in eine Querrichtung (23) geringer ist.

8. Vorrichtung (100) nach einem der vorhergehenden Ansprüche, wobei sich die Zuführeinrichtung (3) und die Fahreinrichtung (4) in der Längsrichtung (11) in einem variablen und von einem Neigungswinkel (9) der Transportpuffereinrichtung (6) abhängenden Abstand (102) befinden.

9. Vorrichtung (100) nach einem der vorhergehenden Ansprüche, wobei wenigstens ein Wartungssteg (105, 106) in Längsrichtung (11) verlängerbar oder teleskopierend und insbesondere abklappbar oder ausziehbar ist.

10. Vorrichtung (100) nach einem der vorhergehenden Ansprüche, wobei der Beladekopf (5) derart höhenverstellbar ist, dass die Transportpuffereinrichtung (6) einen Neigungswinkel (9) von kleiner 60 Grad aufweist.

11. Vorrichtung (100) nach einem der vorhergehenden Ansprüche, wobei die Transportpuffereinrichtung (6) eine parallelogrammartige Tragkonstruktion (7) aufweist, die mit der Zuführeinrichtung (3) an einem Ende und dem Beladekopf (5) an dem anderen Ende schwenkbar verbunden ist.

12. Vorrichtung (100) nach einem der vorhergehenden Ansprüche, wobei der Beladekopf (5) an der Fahreinrichtung (4) über ein flexibles Element (12) höhenverstellbar angeordnet und die Fahreinrichtung (4) mit der Transportpuffereinrichtung (6) über eine Koppeleinrichtung (13) gekoppelt ist, um die Höhe (10) des Beladekopfes (5) einzustellen, sodass bei einer Höhenverstellung des Beladekopfes (5) sich die Zuführeinrichtung (3) in Längsrichtung (11) erheblich mehr bewegt als der Beladekopf (5).

13. Vorrichtung (100) nach einem der vorhergehenden Ansprüche, wobei in Längsrichtung gesehen an wenigstens einem Ende des Wartungssteges und/oder des Stützsteges ein Schutzgitter angeordnet ist.

14. Vorrichtung (100) nach einem der vorhergehenden Ansprüche, wobei die Verbindungseinrichtung (111) zur Aufnahme und Verteilung von Vertikalkräften auf die zwei Fahrkomponenten (103, 104) ausgebildet ist.

## Claims

1. Apparatus (100) comprising a longitudinally movable loading device (1) for loading bags (2) or other packaged goods onto cargo areas (301) of means of transport (300) movable on a transporting surface (201),
wherein the loading device (1) comprises at least two traveling components (103, 104) to be arranged on a feed plane (202) and displaceable in a longitudinal direction (11) and spaced apart from one another, a first of the traveling components (103) being configured as a feeding device (3) for supplying the bags (2),
and wherein a second of the traveling components (104) forms a traveling device (4) including a loading head (5) retained thereon height-adjustable to discharge the bags (2), wherein the feeding device (3) is connected with the loading head (5) through a transport buffer means (6),
wherein one of the traveling components (103, 104) is fixedly connected with at least one co-traveling servicing walkway (105, 106) extending in the longitudinal direction (11) at least over a substantial portion of the distance (102) between the two traveling components (103, 104),
**characterized in**
**that** at the transport buffer means (6) at least one supporting bridge (125, 126) extending laterally outwardly is configured which together with the servicing walkway (105, 106) provides in a top position (46) of the loading head (5) a combined working platform (120) for servicing and repair purposes.

2. The apparatus (100) according to claim 1 wherein the servicing walkway (105, 106) is attached to a servicing carrier (110) which in turn is attached to the feeding device (3).

3. The apparatus (100) according to any of the preceding claims
wherein the servicing walkway (105, 106) is attached to a connecting device (111) comprising at least two telescopic connecting elements wherein the connecting device (111) is received at the two traveling components (103, 104) and is fixedly connected with at least one of the two traveling components (103) and is telescopic in itself so that the two telescopic connecting elements (112, 113) telescope with one another during height adjustment of the loading head (5).

4. The apparatus (100) according to any of the preceding claims
wherein both longitudinal faces of the loading device (1) each have at least one connecting device (111) that extends from the feeding device (3) up to the traveling device (4).

5. The apparatus (100) according to any of the preceding claims
wherein the loading head (5) is adjustable in the transverse direction (23) and wherein the transport buffer means (6) comprises a conveyor track (8) correspondingly swiveling in the transverse direction (23) for transporting the bags (2), wherein the conveyor track (8) is coupled with the feeding device (3) and the loading head (5) to compensate for displacement of the loading head (5) in the transverse direction (23).

6. The apparatus (100) according to the preceding claim wherein the supporting bridge at the transport buffer means (6) extends in the transverse direction (23) up to a maximum deflection distance of the conveyor track (8) as the conveyor track (8) swivels sidewardly.

7. The apparatus (100) according to claim 5 or 6 wherein the width of the transport buffer means (6) is smaller by at least twice the maximum traversing distance (108) of the loading head (5) in a transverse direction (23).

8. The apparatus (100) according to any of the preceding claims wherein the feeding device (3) and the traveling device (4) are located at a distance (102) in the longitudinal direction (11) that is variable and dependent on an inclination angle (9) of the transport buffer means (6).

9. The apparatus (100) according to any of the preceding claims wherein at least one servicing walkway (105, 106) is extendible or telescopic in the longitudinal direction (11) and in particular provided to be folded down or pulled out.

10. The apparatus (100) according to any of the preceding claims wherein the loading head (5) is height-adjustable so that the transport buffer means (6) shows an inclination angle (9) of less than 60 degrees.

11. The apparatus (100) according to any of the preceding claims wherein the transport buffer means (6) comprises a parallelogram-like supporting structure (7) that is pivotally connected with the feeding device (3) at one end and with the loading head (5) at the other end.

12. The apparatus (100) according to any of the preceding claims wherein the loading head (5) is disposed on the traveling device (4) for height adjustment through a flexible member (12) and the traveling device (4) is coupled with the transport buffer means (6) through a coupling device (13) for adjusting the height (10) of the loading head (5) so that upon height adjustment of the loading head (5) the feeding device (3) moves considerably more in the longitudinal direction (11) than does the loading head (5) .

13. The apparatus (100) according to any of the preceding claims wherein, viewed in the longitudinal direction, a protective grate is disposed at least at one end of the servicing walkway and/or of the supporting bridge.

14. The apparatus (100) according to any of the preceding claims wherein the connecting device (111) is configured to absorb and dissipate vertical forces onto the two traveling components (103, 104).

## Revendications

1. Dispositif (100) comprenant un dispositif de chargement (1) mobile en longueur pour charger des sacs (2) ou d'autres produits de détail sur des surfaces de chargement (301) de moyens de transport (300) mobiles sur une surface de transport (201), le dispositif de chargement (1) comprenant au moins deux composantes de conduite (103, 104) à agencer sur un plan d'alimentation (202), déplaçables dans un sens longitudinal (11) et espacées l'une de l'autre, dont une première des composantes de conduite (103) est conçue en tant que dispositif d'alimentation (3) pour amener les sacs (2)
et une deuxième des composantes de conduite (104) formant un dispositif de conduite (4) avec une tête de chargement (5), maintenue réglable en hauteur sur celui-ci, pour déposer les sacs (2), le dispositif d'alimentation (3) étant relié à la tête de chargement (5) par un dispositif tampon de transport (6),
au moins une passerelle de maintenance (105, 106) d'accompagnement étant reliée de manière fixe à une des composantes de conduite (103, 104), laquelle passerelle s'étend dans le sens longitudinal (11) au moins sur une grande partie de la distance (102) entre les deux composantes de conduite (103, 104),
**caractérisé en ce**
**que**, sur le dispositif tampon de transport (6), au moins une passerelle de soutien (125, 126) qui s'étend latéralement vers l'extérieur, étant formée, laquelle fournit, dans une position supérieure (46) de la tête de chargement (5) et en commun avec la passerelle de maintenance (105, 106), une plate-forme de travail commune (120) à des fins de maintenance et de réparation.

2. Dispositif (100) selon la revendication 1, la passerelle de maintenance (105, 106) étant fixée à un support de fixation de maintenance (110) qui est fixé au dispositif d'alimentation (3).

3. Dispositif (100) selon l'une quelconque des revendications précédentes, la passerelle de maintenance (105, 106) étant fixée à un dispositif de liaison (111) comprenant au moins deux composantes de liaison télescopiques, le dispositif de liaison (111) étant monté sur les deux composantes de conduite (103, 104), relié de manière fixe à au moins une des deux composantes de conduite (103) et télescopique à l'intérieur de lui-même, de sorte que lors d'un réglage de la hauteur de la tête de chargement (5), les deux composantes de liaison télescopiques (112, 113) sont télescopiques l'une avec l'autre.

4. Dispositif (100) selon l'une quelconque des revendications précédentes, au moins un dispositif de liaison (111) s'étendant respectivement, sur les deux côtés longitudinaux du dispositif de chargement (1), du dispositif d'alimentation (3) au dispositif de conduite (4).

5. Dispositif (100) selon l'une quelconque des revendications précédentes, la tête de chargement (5) étant réglable dans le sens transversal (23) et le dispositif tampon de transport (6) présentant un trajet de transport (8), pivotable de manière correspondante dans le sens transversal (23), pour transporter les sacs (2), ledit trajet de transport (8) étant couplé au dispositif d'alimentation (3) et à la tête de chargement (5) pour compenser un réglage de ladite tête de chargement (5) dans ledit sens transversal (23).

6. Dispositif (100) selon la revendication précédente, la passerelle de soutien sur le dispositif tampon de transport (6) s'étendant dans le sens transversal (23) d'autant qu'une déviation maximale du trajet de transport (8) lors du pivotement latéral dudit trajet de transport (8).

7. Dispositif (100) selon la revendication 5 ou 6, une largeur du dispositif tampon de transport (6) étant plus petite dans un sens transversal (23) d'au moins le double du chemin de réglage (108) maximal de la tête de chargement (5).

8. Dispositif (100) selon l'une quelconque des revendications précédentes, le dispositif d'alimentation (3) et le dispositif de conduite (4) se trouvant dans le sens longitudinal (11) à une distance (102) variable et dépendant d'un angle d'inclinaison (9) du dispositif tampon de transport (6).

9. Dispositif (100) selon l'une quelconque des revendications précédentes, au moins une passerelle de maintenance (105, 106) étant, en longueur (11), rallongeable ou télescopique et notamment escamotable ou rétractable.

10. Dispositif (100) selon l'une quelconque des revendications précédentes, la tête de chargement (5) étant réglable en hauteur de sorte que le dispositif tampon de transport (6) présente un angle d'inclinaison (9) de moins de 60°.

11. Dispositif (100) selon l'une quelconque des revendications précédentes, le dispositif tampon de transport (6) présentant une construction porteuse (7) en forme de parallélogramme, laquelle est reliée de manière pivotante au dispositif d'alimentation (3) en une extrémité et à la tête de chargement (5) en l'autre extrémité.

12. Dispositif (100) selon l'une quelconque des revendications précédentes, la tête de chargement (5) étant agencée sur le dispositif de conduite (4) de manière réglable en hauteur par le biais d'un élément souple (12), et le dispositif de conduite (4) étant couplé au dispositif tampon de transport (6) par un dispositif de couplage (13) pour régler la hauteur (10) de la tête de chargement (5), de sorte que lors d'un réglage de la hauteur de la tête de chargement (5), le dispositif d'alimentation (3) se déplace beaucoup plus en longueur (11) que la tête de chargement (5).

13. Dispositif (100) selon l'une quelconque des revendications précédentes, une grille de protection étant agencée, vu dans le sens de la longueur, à au moins une extrémité de la passerelle de maintenance et/ou de la passerelle de soutien.

14. Dispositif (100) selon l'une quelconque des revendications précédentes, le dispositif de liaison (111) étant conçu pour recevoir et répartir des forces verticales sur les deux composantes de conduite (103, 104).
